# EUROPEAN PATENT APPLICATION

(11) **EP 4 842 130 A1**
(43) Date of publication of application: **18.11.2026**
(21) Application number: 25738607.8
(22) Date of filing: 13.01.2025
(51) Int. Cl.: H04W 74/08

(54) **SIGNAL SENDING METHOD, SIGNAL RECEIVING METHOD AND DEVICE**

(30) Priority: 12.01.2024 CN 202410055284
(71) Applicant: Vivo Mobile Communication Co., Ltd., Dongguan, Guangdong 523863 (CN)
(72) Inventor: JIANG, Lu, Dongguan, Guangdong 523863 (CN); CHEN, Xiaohang, Dongguan, Guangdong 523863 (CN); LI, Gen, Dongguan, Guangdong 523863 (CN)
(74) Representative: Lavoix
(86) International application number: PCT/CN2025/072008
(87) International publication number: WO 2025/149080

(57) **Abstract**

This application discloses a signal sending method and apparatus, and a signal receiving method and apparatus, and belongs to the field of communication technologies. The method in embodiments of this application includes: obtaining, by a terminal, first information from a first cell or a second cell; sending, by the terminal, a first signal on a target resource based on the first information, where the first signal is used for triggering or requesting at least one of SIB adaptation, SSB adaptation, RO adaptation, or paging adaptation of the second cell; the first information is used for determining at least one of the target resource, the first signal, or the second cell; and the target resource includes at least one of the following: a target random access channel occasion RO, used for random access, of the second cell; a first resource, which is a random access channel RACH resource used for random access partition; or a second resource, which is a resource separate from a RACH resource of the second cell and dedicated to sending the first signal.

## Description

### CROSS-REFERENCE TO RELATED APPLICATIONS

This application claims priority to Chinese patent application No.202410055284.8 filed on January 12, 2024, which is incorporated herein by reference in its entirety.

### TECHNICAL FIELD

This application belongs to the field of communication technologies, and in particular, relates to a signal sending method and apparatus, and a signal receiving method and apparatus.

### BACKGROUND

At present, to obtain a greater energy saving gain of a network, a cell performs an energy-saving operation in a specific scenario, for example, sends no system information block (System Information Block, SIB) or synchronization signal block (Synchronization Signal Block, SSB), or triggers sending of an SIB as required.

However, when scenario switch occurs, the energy-saving operation no longer meets a communication requirement between a terminal and the network. For example, when UE has a requirement for accessing an energy-saving cell, the energy-saving cell needs to restore a normal operation or return to a normal operating state. Therefore, how to meet the communication requirement between the terminal and the network and how to enable the energy-saving cell to restore a normal operating state has become a problem to be urgently resolved.

### SUMMARY

Embodiments of this application provide a signal sending method and apparatus, and a signal receiving method and apparatus, which can meet a communication requirement between a terminal and a network.

According to a first aspect, a signal sending method is provided, including:
obtaining, by a terminal, first information from a first cell or a second cell;
sending, by the terminal, a first signal on a target resource based on the first information, where
the first signal is used for triggering or requesting at least one of system information block SIB adaptation, synchronization signal block SSB adaptation, random access occasion RO adaptation, or paging adaptation of the second cell;
the first information is used for determining at least one of the target resource, the first signal, or the second cell; and
the target resource includes at least one of the following:
a target random access channel occasion RO, used for random access, of the second cell;
a first resource, which is a random access channel RACH resource used for random access partition; or
a second resource, which is a resource separate from a RACH resource of the second cell and dedicated to sending the first signal.

According to a second aspect, a signal receiving method is provided, including:
receiving, by a network side device, a first signal sent on a target resource, where
the first signal is used for triggering or requesting at least one of system information block SIB adaptation, synchronization signal block SSB adaptation, random access occasion RO adaptation, or paging adaptation of a second cell; and
the target resource includes at least one of the following:
a target random access channel occasion RO, used for random access, of the second cell;
a first resource, which is a separate random access channel RACH resource used for random access partition; or
a second resource, which is a resource separate from a RACH resource of the second cell and dedicated to sending the first signal.

According to a third aspect, a signal sending apparatus is provided, including:
an obtaining module, configured to obtain first information from a first cell or a second cell; and
a sending module, configured to send a first signal on a target resource based on the first information, where
the first signal is used for triggering or requesting at least one of system information block SIB adaptation, synchronization signal block SSB adaptation, random access occasion RO adaptation, or paging adaptation of the second cell;
the first information is used for determining at least one of the target resource, the first signal, or the second cell; and
the target resource includes at least one of the following:
a target random access channel occasion RO, used for random access, of the second cell;
a first resource, which is a random access channel RACH resource used for random access partition; or
a second resource, which is a resource separate from a RACH resource of the second cell and dedicated to sending the first signal.

According to a fourth aspect, a signal receiving apparatus is provided, including:
a receiving module, configured to receive a first signal sent on a target resource, where
the first signal is used for triggering or requesting at least one of system information block SIB adaptation, synchronization signal block SSB adaptation, random access occasion RO adaptation, or paging adaptation of a second cell; and
the target resource includes at least one of the following:
   a target random access channel occasion RO, used for random access, of the second cell;
   a first resource, which is a separate random access channel RACH resource used for random access partition; or
   a second resource, which is a resource separate from a RACH resource of the second cell and dedicated to sending the first signal.

According to a fifth aspect, a terminal is provided, where the terminal includes a processor and a memory, the memory stores a program or an instruction runnable on the processor, and the program or the instruction, when executed by the processor, implements the steps of the method according to the first aspect.

According to a sixth aspect, a terminal is provided, including a processor and a communication interface, where the processor is configured to obtain first information from a first cell or a second cell, and the communication interface is configured to send a first signal on a target resource based on the first information, where
the first signal is used for triggering or requesting at least one of system information block SIB adaptation, synchronization signal block SSB adaptation, random access occasion RO adaptation, or paging adaptation of the second cell;
the first information is used for determining at least one of the target resource, the first signal, or the second cell; and
the target resource includes at least one of the following:
a target random access channel occasion RO, used for random access, of the second cell;
a first resource, which is a random access channel RACH resource used for random access partition; or
a second resource, which is a resource separate from a RACH resource of the second cell and dedicated to sending the first signal.

According to a seventh aspect, a network side device is provided, where the network side device includes a processor and a memory, the memory stores a program or an instruction runnable on the processor, and the program or the instruction, when executed by the processor, implements the steps of the method according to the second aspect.

According to an eighth aspect, a network side device is provided, including a processor and a communication interface, where the communication interface is configured to receive a first signal sent on a target resource, where
the first signal is used for triggering or requesting at least one of system information block SIB adaptation, synchronization signal block SSB adaptation, random access occasion RO adaptation, or paging adaptation of a second cell; and
the target resource includes at least one of the following:
a target random access channel occasion RO, used for random access, of the second cell;
a first resource, which is a separate random access channel RACH resource used for random access partition; or
a second resource, which is a resource separate from a RACH resource of the second cell and dedicated to sending the first signal.

According a ninth aspect, a readable storage medium is provided, where the readable storage medium stores a program or an instruction, and the program or the instruction, when executed by a processor, implements the steps of the method according to the first aspect, or the steps of the method according to the second aspect.

According to a tenth aspect, a wireless communication system is provided, including a terminal and a network side device, where the terminal may be configured to perform the steps of the method according to the first aspect, and the network side device may be configured to perform the steps of the method according to the second aspect.

According to an eleventh aspect, a chip is provided, where the chip includes a processor and a communication interface, the communication interface is coupled to the processor, and the processor is configured to run a program or an instruction to implement the method according to the first aspect or the method according to the second aspect.

According to a twelfth aspect, a computer program/program product is provided, where the computer program/program product is stored in a storage medium, and the computer program/program product is executed by at least one processor to implement the steps of the method according to the first aspect or the steps of the method according to the second aspect.

In the embodiments of this application, a terminal can obtain, from a first cell or a second cell, first information used for determining at least one of a target resource, a first signal, or a second cell, and then send the first signal on the target resource based on the first information, to trigger or request at least one of SIB adaptation, SSB adaptation, RO adaptation, or paging adaptation of the second cell, thereby meeting a communication requirement between the terminal and a network.

### BRIEF DESCRIPTION OF THE DRAWINGS

FIG. 1 is a block diagram of a wireless communication system;
FIG. 2 is a schematic flowchart of a signal sending method according to an embodiment of this application;
FIG. 3 is a first diagram of a preamble configuration;
FIG. 4 is a second diagram of a preamble configuration;
FIG. 5 is a third diagram of preamble configuration;
FIG. 6 is a first diagram of a target resource;
FIG. 7 is a second diagram of a target resource;
FIG. 8 is a third diagram of a target resource;
FIG. 9 is a fourth diagram of a target resource;
FIG. 10 is a diagram of a second resource;
FIG. 11 is a fourth diagram of a preamble configuration;
FIG. 12 is a fifth diagram of a preamble configuration;
FIG. 13 is a first diagram of random access resource selection with PRACH repetitions;
FIG. 14 is a second diagram of random access resource selection with PRACH repetitions;
FIG. 15 is a schematic flowchart of a signal receiving method according to an embodiment of this application;
FIG. 16 is a diagram of modules of a signal sending apparatus according to an embodiment of this application;
FIG. 17 is a diagram of modules of a signal receiving apparatus according to an embodiment of this application;
FIG. 18 is a diagram of a structure of a communication device according to an embodiment of this application;
FIG. 19 is a diagram of a structure of a terminal according to an embodiment of this application; and
FIG. 20 is a diagram of a structure of a network side device according to an embodiment of this application.

### DETAILED DESCRIPTION

Technical solutions in embodiments of this application are clearly described in the following with reference to the accompanying drawings in the embodiments of this application. Apparently, the described embodiments are some rather than all of the embodiments of this application. All other embodiments obtained by a person of ordinary skill in the art based on the embodiments of this application fall within the protection scope of this application.

Terms "first", "second", and the like in this application are used for distinguishing similar objects, but are not used for describing a specific sequence or order. It should be understood that the terms used in such a way are interchangeable in proper circumstances, so that the embodiments of this application can be implemented in other sequences than those illustrated or described herein. In addition, the objects distinguished by "first" and "second" are usually of one type, and there is no limitation on quantities of the objects. For example, there may be one or more first objects. In addition, the term "or" in this application indicates at least one of the connected objects. For example, "A or B" covers three solutions, that is, solution 1: A is included and B is not included; solution 2: B is included and A is not included; and solution 3: both A and B are included. The character "/" generally indicates an "or" relationship between the associated objects.

In this application, the term "indication" may be a direct indication (or referred to as an explicit indication) or an indirect indication (or referred to as an implicit indication). The direct indication may be understood as a sending party explicitly informing a receiving party of content such as specific information, an operation that needs to be performed, or a request result in the sent indication. The indirect indication may be understood as a receiving party determining corresponding information based on an indication sent by a sending party, or performing determining and determining an operation that needs to be performed or a request result based on a determining result.

It should be noted that the technologies described in the embodiments of this application are not limited to a long term evolution (Long Term Evolution, LTE)/LTE-advanced (LTE-Advanced, LTE-A) system, and may also be used in another wireless communication system, such as Code Division Multiple Access (Code Division Multiple Access, CDMA), Time Division Multiple Access (Time Division Multiple Access, TDMA), Frequency Division Multiple Access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), or another system. The terms "system" and "network" in the embodiments of this application are often used interchangeably, and the described technologies can be used not only for the above-mentioned systems and radio technologies, but also for other systems and radio technologies. The following descriptions describe a New Radio (New Radio, NR) system for exemplary purposes, and the term NR is used for most of the following descriptions. However, these technologies are also applicable to systems other than the NR system, such as a 6^{th} generation (6^{th} Generation, 6G) communication system.

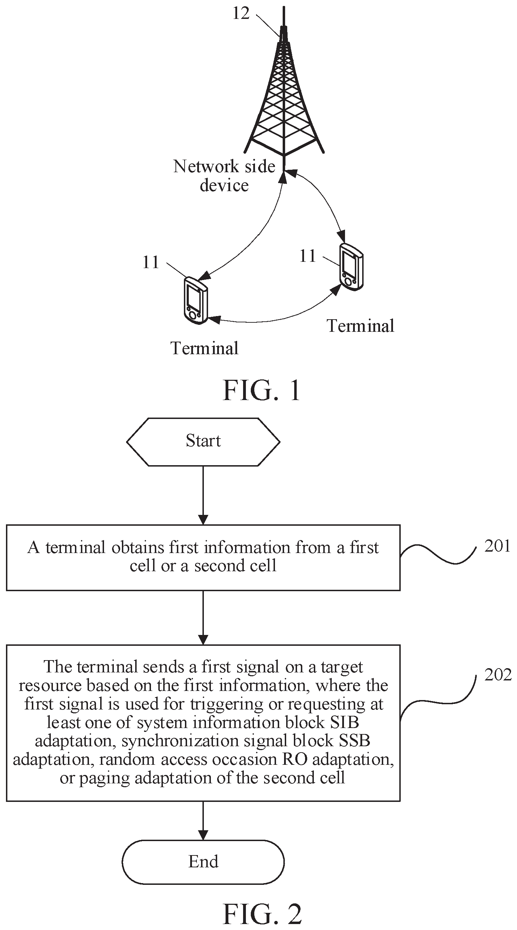

FIG. 1 is a block diagram of a wireless communication system to which an embodiment of this application is applicable. The wireless communication system includes a terminal 11 and a network side device 12. The terminal 11, also referred to as user equipment (User Equipment, UE), may be a terminal side device such as a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile Internet device (Mobile Internet Device, MID), an augmented reality (Augmented Reality, AR) device, a virtual reality (Virtual Reality, VR) device, a robot, a wearable device (Wearable Device), a flight vehicle (flight vehicle), vehicle user equipment (Vehicle User Equipment, VUE), a ship-mounted device, pedestrian user equipment (Pedestrian User Equipment, PUE), a smart household (a household device having a wireless communication function, such as a refrigerator, a television, a washing machine, or furniture), a game console, a personal computer (Personal Computer, PC), a teller machine, or a self-service machine. The wearable device includes a smartwatch, a smart band, a smart earphone, smart glasses, smart jewelry (a smart bracelet, a smart wrist-band, a smart ring, a smart necklace, a smart anklet, a smart ankle chain, or the like), a smart wrist strap, smart clothes, or the like. The vehicle user equipment may also be referred to as a vehicle terminal, a vehicle controller, a vehicle module, a vehicle component, a vehicle chip, a vehicle unit, or the like. It should be noted that a specific type of the terminal 11 is not limited in this embodiment of this application. The network side device 12 may include an access network device or a core network device. The access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), a Wireless Fidelity (Wireless Fidelity, WiFi) node, or the like. The base station may be referred to as a NodeB (NodeB, NB), an evolved NodeB (Evolved NodeB, eNB), a next generation NodeB (the next generation NodeB, gNB), a New Radio NodeB (New Radio NodeB, NR NodeB), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home NodeB, HNB), a home evolved NodeB (home evolved NodeB), a transmission reception point (Transmission Reception Point, TRP), or another appropriate term in the art. Provided that the same technical effects are achieved, the base station is not limited to a specific technical term. It should be noted that, in this embodiment of this application, only a base station in an NR system is used as an example for description, and a specific type of the base station is not limited.

For ease of understanding, some contents involved in the embodiments of this application are described below:

### 1. Preamble (preamble) assignment

A high layer configures, by using a parameter ssb-perRACH-OccasionAndCB-PreamblesPerSSB, N (L1 parameter: SSB-per-rach-occasion) SSBs to be associated with one random access occasion (RACH-Occasion, RO) (frequency domain), and a quantity (L1 parameter: CB-preambles-per-SSB) of contention-based preambles of each SSB on each valid RO. The RO may also be understood as a physical random access channel (Physical Random Access Channel, PRACH) occasion. A configuration of N is as follows:

If N < 1, one SSB is mapped to 1/N consecutive valid PRACH occasions (frequency domain) (for example, if N = 1/8, one SSB is mapped to eight PRACH occasions), and R preambles with consecutive indexes are mapped to SSB n, where 0 ≤ n ≤ n - 1, and each valid PRACH occasion starts from a preamble index 0 (for example, if N = 1/8, one SSB is mapped to eight PRACH occasions, and one SSB has eight starting points whose preamble indexes are 0, because one PRACH occasion corresponds to one starting point whose preamble index is 0).

### 2. Random access (Random Access, RA) partition (partition)

Case (Case) 1: Features (features) of protocols 15 (R15), R16, and R17 share a set of ROs, that is, have shared (shared) ROs.

Case 2: In case of a separate RO for RA partitioning (separate RO for RA partitioning), a preamble configured on the separate RO can be associated with only an R17 feature.

A feature combination preamble information element (Information Elements, IE) configures a group of preambles to be associated with a feature combination (combination). Parameters may be provided in this IE, or may be provided in a random access common configuration (RACH-ConfigCommon) or an MsgA common configuration (MsgA-ConfigCommon). If a parameter provided in this IE is identified, the terminal applies the field value by using a preamble in the feature combination preamble when performing random access; otherwise, applies a corresponding value identified in RACH-ConfigCommon or MsgA-ConfigCommon.

Feature Combination Preambles-r17 configures a start preamble position for each feature (startPreambleForThisPartition), and a quantity of available preambles for this feature (numerOfPreamblesForThisPartition).

### 3. Random access resource selection with PRACH repetitions

For PRACH repetitions, the UE needs to repeatedly send a preamble to a plurality of ROs at different positions in time domain that are associated with a same SSB. A quantity of PRACH repetitions may be {2, 4, 8}. After determining the quantity of PRACH repetitions, the UE needs to determine a set of ROs, and a quantity of valid ROs in the set of ROs is equal to the quantity of PRACH repetitions.

Assuming that the quantity of PRACH repetitions is N1, an overall rule for determining an RO group (group) within a time window X is as follows: first, a starting RO (starting RO) of a first RO group is determined, and then, remaining N1-1 ROs of the first RO group are determined. Then, a starting RO of each of other RO groups and remaining ROs of the RO group are sequentially determined. Remaining N1-1 ROs in each RO group are ROs associated with a same SSB, a same frequency position, and a same associated Preamble set as a starting RO. After the first RO group is determined, determining of the remaining RO groups is related to whether a time offset (time offset) is configured. An objective of introducing the time offset is to reduce a quantity of ROs to be detected on a network side to reduce pressure.

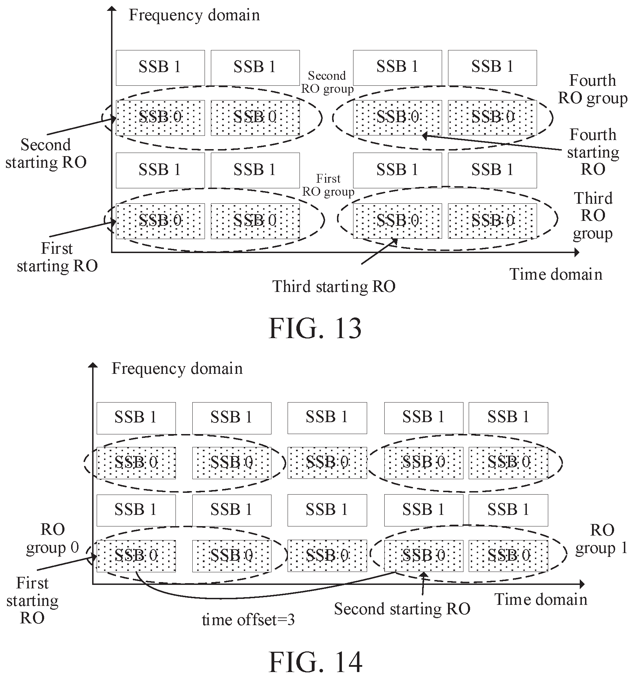

If no time offset is configured, for each SSB, a first valid RO within the time window X is used as a starting RO (starting RO) of the first RO group, and the first RO group is determined based on the starting RO. Then, on other ROs than the determined RO group, starting ROs of subsequent RO groups are determined within the time window X in ascending order of frequency domain positions first and then in ascending order of time domain positions, and the subsequent RO groups are further determined. For example, assuming that the quantity of PRACH repetitions is 2, for SSB #0, RO groups may be determined as shown in FIG. 13.

If a time offset is configured, for each SSB, a first valid RO found within the time window X in an order of frequency domain followed by time domain is used as a starting RO of the first RO group, and then the first RO group is determined based on the starting RO. Then, on other ROs than the determined RO group, starting ROs of subsequent RO groups are determined in an order of frequency domain followed by time domain and the corresponding RO groups are determined. A starting RO of an n^{th} RO group associated with a same SSB at a same frequency position is an RO whose distance from a starting RO of an (n-1)^{th} RO group is the time offset. A definition of the time offset is a quantity of valid ROs associated with a same SSB in time domain. For example, assuming that the quantity of PRACH repetitions is 2, and time offset = 3, for SSB #0, RO groups may be determined as shown in FIG. 14.

A signal sending method and apparatus, and a signal receiving method and apparatus provided in the embodiments of this application are described in detail below through some embodiments and application scenarios thereof with reference to the accompanying drawings.

As shown in FIG. 2, a signal sending method of an embodiment of this application includes the following steps:
Step 201: A terminal obtains first information from a first cell or a second cell.
Step 202: The terminal sends a first signal on a target resource based on the first information, where
the first signal is used for triggering or requesting at least one of system information block SIB adaptation, synchronization signal block SSB adaptation, random access occasion RO adaptation, or paging adaptation of the second cell;
the first information is used for determining at least one of the target resource, the first signal, or the second cell; and
the target resource includes at least one of the following:
a target random access channel occasion RO, used for random access, of the second cell;
a first resource, which is a random access channel RACH resource used for random access partition; or
a second resource, which is a resource separate from a RACH resource of the second cell and dedicated to sending the first signal.

In this way, after obtaining, from the first cell or the second cell based on the above-mentioned steps 201 and 202, the first information used for determining at least one of the target resource, the first signal, or the second cell, the terminal can send the first signal on the target resource based on the first information, to trigger or request at least one of SIB adaptation (adaptation), SSB adaptation, RO adaptation, or paging (Paging) adaptation of the second cell, thereby meeting a communication requirement between the terminal and a network.

The first cell is a non-energy-saving cell, and the second cell is an energy-saving cell (that is, a cell supporting on-demand SIB1, or a cell using an energy-saving technology). Alternatively, a cell may be understood as a base station. In this case, the first cell is a non-energy-saving base station, and the second cell is an energy-saving base station. Alternatively, the first cell is a serving cell (serving cell) of UE, or the first cell is a cell that UE currently camps on.

The first signal may be an uplink UE wake-up signal (Wake Up Signal, WUS). Specifically, the first signal may be in a form of a preamble sequence.

If the target resource is used for sending a WUS, the target resource may also be referred to as a WUS occasion, referred to as a WO for short.

The adaptation may be switching a corresponding object from a non-sending state to a sending state, or switching a sending period from a long period to a short period, or the like.

Optionally, when triggering or requesting SIB adaptation of the second cell, the WUS may trigger or request SIB1 adaptation.

Optionally, in this embodiment, the first information includes at least one of the following:
related information of the second cell;
configuration information of the first signal;
target threshold information used for determining the target resource;
a target SSB index;
time division duplex TDD configuration information (TDD configuration);
random access configuration information (RACH configuration);
additional random access common configuration information (AdditionalRACH-ConfigCommon); or
an RO mask (mask).

Optionally, the related information of the second cell includes at least one of the following:
a timing (timing) or a system frame number (SystemFrameNumber, SFN);
a timing offset (timing offset) from the first cell;
an SSB burst pattern (burst pattern) and periodicity;
SSB transmit power (tx power);
a timing advance offset (TA offset); or
a frequency of the second cell.

Herein, the second cell is also referred to as a target cell (Target cell). In this case, the related information of the second cell is also referred to as information of the Target cell. The SSB tx power is used for calculating a path loss (Path Loss, Pathloss) PL and transmit power of the WUS.

Optionally, the configuration information of the first signal includes at least one of the following:
a time-frequency domain resource configuration; or
a preamble-related configuration.

The time-frequency domain resource configuration may be related information, of a time domain or a frequency domain, configured on a network side and used for WUS transmission. The preamble-related configuration may be related information of a preamble that is configured on a network side and used for sending the WUS, such as a preamble configuration of the WUS.

Optionally, the preamble-related configuration includes at least one of the following:
a preamble format (WUS Preamble format);
a quantity of repeated transmissions, that is, a quantity of repeated WUS transmissions;
an occasion pattern for repeated transmissions (WUS occasion pattern for WUS repetition);
a first time domain offset, used for indicating a quantity of first signal occasions WOs spaced between adjacent target resource groups associated with a same SSB;
a second time domain offset, used for indicating a quantity of WOs spaced between adjacent target resource groups;
a preamble root sequence (Preamble root sequence);
a quantity of target preambles;
a start index of the target preamble;
an end index of the target preamble;
a quantity of SSBs associated with the WO, and a quantity of preambles associated with each SSB;
a feature combination preamble configuration (FeatureCombinationPreambles);
a feature in a feature combination (FeatureCombination); or
a feature priority (FeaturePriorities).

The WUS occasion pattern for WUS repetition is used for determining a WUS occasion pattern for sending WUS repetition, and specifically, may include, but is not limited to, a start number and quantity of available occasions in ascending order in time domain or frequency domain.

The first time domain offset is a quantity of WOs spaced between two adjacent target resource groups (WUS occasion groups). Certainly, the two WUS occasion groups and the spaced WOs are both associated with a same SSB.

The second time domain offset is a quantity of WOs spaced between two adjacent target resource groups (WUS occasion groups). The second time domain offset is applicable to a case in which the SSB is not associated with the WO.

The Preamble root sequence may be shared or separated with a plurality of cells, and is different from a root sequence used by a conventional RACH.

The quantity of target preambles refers to a total quantity of preambles used for sending the WUS. For example, assuming that preambles of a new feature (for example, a network energy saving (Network Energy Saving, NES) feature) are added to 64 preambles configured by Radio Resource Control (Radio Resource Control, RRC), if NES Preambles are target preambles, a quantity of the target preambles is a total quantity of the NES Preambles (totalNumberOfNES-Preambles). totalNumberOfNES-Preambles is a new RRC parameter (parameter).

For the start index of the target preamble, referring back to the foregoing example, when an NES feature is newly added, and an NES Preamble is a target preamble, a start index of the target preamble may be a start index (NES-PreambleStartIndex) of the NES Preamble. NES-PreambleStartIndex is a new RRC parameter.

The end index of the target preamble is similar to the start index of the target preamble, and details are omitted herein.

For the quantity of SSBs associated with the WO and the quantity of preambles associated with each SSB, referring back to the foregoing example, a new RRC parameter, namely, ssb-perWUS-OccasionAndNES-PreamblesPerSSB, may be configured.

The FeatureCombinationPreambles includes at least a start preamble position (startPreambleForThisPartition) corresponding to each feature or one or more feature combinations, a quantity of available preambles for the feature (numberOfPreamblesForThisPartition), a shared RO mask index (ssb-SharedRO-MaskIndex), and an SSB target threshold (rsrp-ThresholdSSB) that corresponds to the feature and to which reference is made when an RO is selected. Certainly, the FeatureCombinationPreambles may include only an IE in an existing protocol, and details are omitted herein.

For the FeatureCombination, referring back to the foregoing example, when an NES feature is newly added, the FeatureCombination includes the NES feature.

The FeaturePriorities is used for determining a feature having a relatively high priority among a plurality of features, and the UE selects an appropriate RA resource based on the priority of the feature.

Optionally, the target threshold information includes at least one of the following:
a first threshold, where the first threshold is an SSB target threshold to which reference is made when an RO is selected for random access;
a second threshold, where the second threshold is an SSB target threshold to which reference is made when a first signal of a first purpose is sent, and the first purpose is to trigger or request SIB adaptation of the second cell;
a third threshold, where the third threshold is an SSB target threshold to which reference is made when a first signal of a second purpose is sent, and the second purpose is to trigger or request SSB adaptation of the second cell;
a fourth threshold, where the fourth threshold is an SSB target threshold to which reference is made when a first signal of a third purpose is sent, and the third purpose is to trigger or request RO adaptation of the second cell; or
a fifth threshold, where the fifth threshold is an SSB target threshold to which reference is made when a first signal of a fourth purpose is sent, and the fourth purpose is to trigger or request paging adaptation of the second cell.

The first threshold may be rsrp-ThresholdSSB, where rsrp-ThresholdSSB is a target threshold used for selecting an RO when Msg1 is sent, and is an RRC parameter in the existing protocol.

The second threshold may be a new RRC parameter, such as rsrp-ThresholdSSBforSIB1Triggering.

The third threshold may be a new RRC parameter, such as rsrp-ThresholdSSBforSSBAdaptation.

The fourth threshold may be a new RRCparameter, such as rsrp-ThresholdSSBforROAdaptation.

The fifth threshold may be a new RRCparameter, such as rsrp-ThresholdSSBforPagingAdaptation.

Optionally, in this embodiment, if the first information includes a target SSB index (index), the target SSB index may be used for determining that an RO associated with the target SSB index may be used for sending a WUS.

Optionally, in this embodiment, if the first information includes random access configuration information, the random access configuration information (RACH resource configuration) may include an RO configuration and a configuration of a preamble. The RACH resource configuration is a RACH resource configuration of the target cell.

Optionally, the random access configuration information includes at least one of a random access common configuration (rach-configCommon) and a random access generic configuration (RACH-ConfigGeneric).

The random access common configuration includes at least one of the following:
a total quantity of random access preambles (totalNumberOfRA-Preambles);
a quantity of SSBs associated with each RO and a quantity of preambles associated with each SSB (ssb-perRACH-OccasionAndCB-PreamblesPerSSB);
a physical random access channel PRACH root sequence index (prach-RootSequenceIndex); or
an SSB target threshold (such as rsrp-ThresholdSSB) to which reference is made when an RO is selected for random access.

The random access generic configuration includes at least one of the following:
a PRACH configuration index (prach-ConfigurationIndex);
a frequency division multiplexing FDM configuration of a contention-based first random access message Msg1 (msg1-FDM);
a frequency domain start position of Msg1 (msg1-FrequencyStart);
preamble received target power (preambleReceivedTargetPower); or
a power ramping step (powerRampingStep).

The prach-ConfigurationIndex is used for time domain configuration and preamble format configuration.

Optionally, in this embodiment, if the first information includes an RO mask, the RO mask can be used for determining an RO that may be used for sending the WUS among ROs associated with one SSB.

Optionally, the RO mask includes one of the following:
first indication information, used for indicating a start index and quantity of one or more ROs that are allowed to send the first signal among ROs associated with each SSB, where among the ROs associated with each SSB, indexs of the ROs are numbered in an order of frequency domain followed by time domain;
second indication information, used for indicating parity of indexs of one or more ROs that are allowed to send the first signal among ROs associated with each SSB; or
third indication information, used for indicating a quantity of one or more ROs that are allowed to send the first signal among ROs associated with each SSB, where a starting RO is a default RO.

For each SSB, all ROs associated with one SSB may be first determined, and then the ROs are sequentially numbered in an order of frequency domain followd by time domain, and the numbers are used as indexs (occasion indexes) of the ROs. Therefore, the first indication information may include a start index and a quantity of ROs. In this case, among all the ROs of the SSB, it is determined that starting from the start index, consecutive ROs of this quantity are ROs that can be used for sending the WUS. For example, if the occasion index = 1, and the quantity = 4, starting from the occasion index = 1, four consecutive ROs may all be used for sending the WUS in the order of frequency domain followed by time domain.

The second indication information indicates, by indicating parity of an index of an RO, one or more ROs that are allowed to send the first signal among ROs associated with each SSB. For example, if the second indication information indicates that an index of an RO is an odd number, an RO whose occasion index is an odd number may be used for sending a WUS. The index is also obtained in the foregoing manner.

Certainly, for ROs associated with each SSB, indexs of one or more ROs that are allowed to send the first signal may also be directly and explicitly indicated.

Based on a case that a default RO is preset as a starting RO, the third indication information only needs to include a quantity of ROs. In this case, among all ROs of one SSB, it is determined that, starting from the default RO, consecutive ROs of this quantity are ROs that can be used for sending the WUS. For example, if the default RO is the first RO, and the quantity = 4, starting from the first RO, four consecutive ROs may all be used for sending the WUS.

In addition, for the target resource including the target RO, used for random access, of the second cell, optionally, in this embodiment, the target RO, used for random access, of the second cell is determined based on a measurement result of a reference signal of the second cell; or
the target RO, used for random access, of the second cell is determined by an RO mask; or
the target RO, used for random access, of the second cell is an RO associated with a target SSB index, where
the RO mask and the target SSB index are included in the first information or configured by a network side.

That is, the target RO, used for random access, of the second cell may be determined based on the measurement result of the reference signal of the second cell, the RO mask, or the target SSB index, and the UE may send the WUS on the target RO. The RO mask or target SSB index used may be included in the first information described above, or may be configured by the network side.

Optionally, the target RO, for random access, of the second cell is an RO corresponding to a reference signal having a best measurement result among reference signals of the second cell; or
the target RO, used for random access, of the second cell is an RO corresponding to a reference signal whose measurement result is greater than a target threshold among reference signals of the second cell. The target threshold is configured by the network side or included in the first information, and a plurality of target thresholds and first signals of different purposes are mapped one to one.

That is, in one manner, if the target RO, used for random access, of the second cell is determined based on the measurement result of the reference signal of the second cell, an RO corresponding to a reference signal having a best measurement result is determined as the target RO by comparing measurement results of different reference signals of the second cell. In an example in which a measurement amount is RSRP, the measurement result includes values of RSRP of the plurality of reference signals of the second cell. In this case, the best measurement result means that the RSRP is the largest, and an RO corresponding to a reference signal having the largest RSRP among the plurality of reference signals of the second cell is the target RO. Certainly, for different measurement amounts, there is also a case that a smallest value of the measurement amount indicates a best measurement result, and an RO corresponding to a reference signal having the smallest measurement amount needs to be determined as the target RO.

In one manner, in a case that the target RO, used for random access, of the second cell is determined based on the measurement result of the reference signal of the second cell, a measurement result of each reference signal of the second cell is respectively compared with the target threshold, to determine that an RO corresponding to a reference signal whose measurement result is greater than the target threshold among the reference signals of the second cell is the target RO. In an example in which a measurement amount is RSRP, the target threshold is rsrp-ThresholdSSB, and the measurement result includes values of RSRP of a plurality of reference signals of the second cell. In this case, an RO corresponding to a reference signal whose RSRP is greater than rsrp-ThresholdSSB among the plurality of reference signals of the second cell is the target RO. Certainly, for different measurement amounts, there is also a case that a smallest value of the measurement amount indicates a best measurement result, that is, an RO corresponding to a reference signal whose measurement amount is less than the target threshold needs to be determined as the target RO.

Because different target thresholds may be configured for WUSs of different purposes (functions), as shown by the target threshold information in the first information, target resources determined for the WUSs of different purposes may be different.

In this embodiment, the reference signal may be an SSB.

When the target RO, used for random access, of the second cell is determined by an RO mask, optionally, in this embodiment, the RO mask is used for indicating one or more ROs that are allowed to send the first signal among ROs associated with each SSB, or is used for indicating one or more ROs that are allowed to send the first signal among ROs associated with the target SSB index.

Specifically, the RO mask is used for indicating a set or subset of ROs that are allowed to send the WUS among ROs associated with each SSB, where the set or subset of ROs includes one or more ROs; or is used for indicating a set or subset of ROs that are allowed to send the WUS among ROs associated with the target SSB index, where the set or subset of ROs includes one or more ROs.

Optionally, there are one or more RO masks, and when there are a plurality of RO masks, the plurality of RO masks are used for determining one or more ROs of first signals of different purposes.

That is, a plurality of RO masks are included in the first information or configured by the network side, the plurality of RO masks may be respectively used for determining one or more ROs of WUSs of different purposes.

Optionally, in this embodiment, the second resource includes a plurality of sets of resources used for the first signals of different purposes.

That is, resources separate from the RACH resource of the second cell and dedicated to sending the WUS may be a plurality of sets of resources, respectively corresponding to sending of WUSs of different purposes.

Optionally, in this embodiment, no mapping relationship between SSBs and ROs exists in the second resource.

In this embodiment, the configuration of the first resource and the configuration of the second resource may be included in the first information or may be configured by a network side.

Optionally, in this embodiment, the first signal is one of target preambles, configured by the network side, that can be used for sending the first signal, and the target preamble includes at least one of the following:
a preamble not used for random access; or
a preamble used for random access.

That is, a preamble for sending a WUS is one of target preambles, configured by the network side, that can be used for sending a WUS. The target preamble may be a preamble not used for random access, or may be a preamble used for random access.

The preamble not used for random access may be a preamble separate from the preamble used for random access. The preamble used for random access may be a preamble included in an RA preamble and associated with a feature combination.

Optionally, an index of the preamble not used for random access is located before or after an index of a preamble used for a system information request.

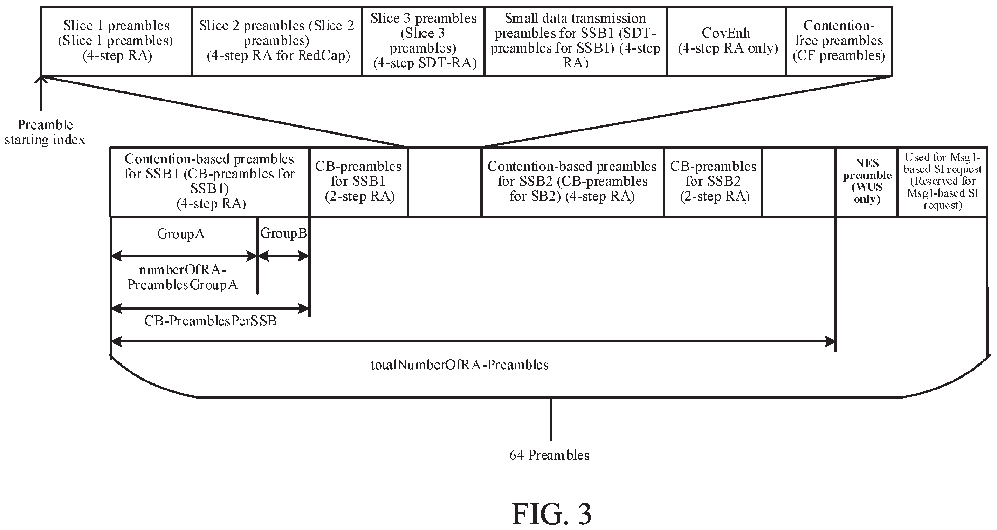

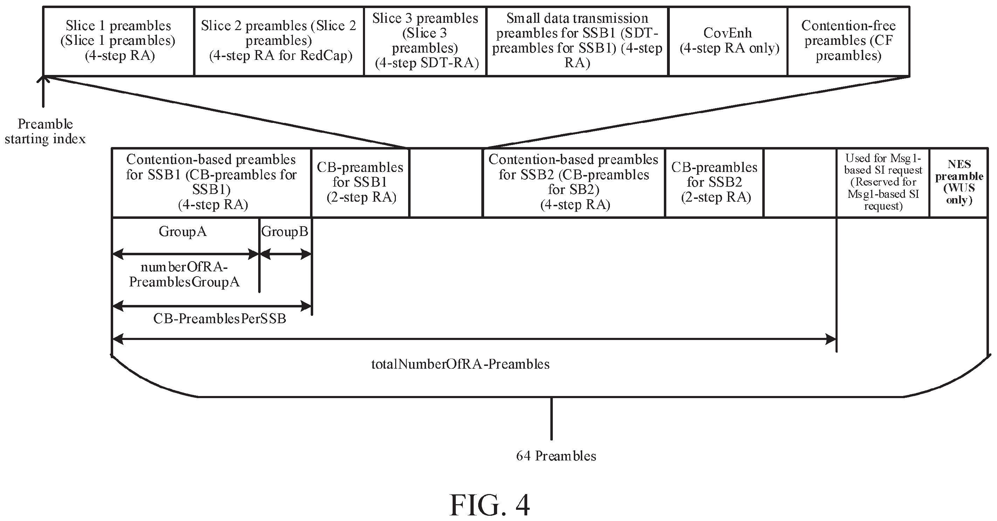

That is, in a preamble configuration, an index of a preamble not used for random access may be before or after an index of a preamble used for a system information request (SI request), for example, as shown in FIG. 3 or FIG. 4.

Optionally, an index of the preamble used for random access is located before an index of a contention-free preamble and after an index of a preamble used for a coverage enhancement feature.

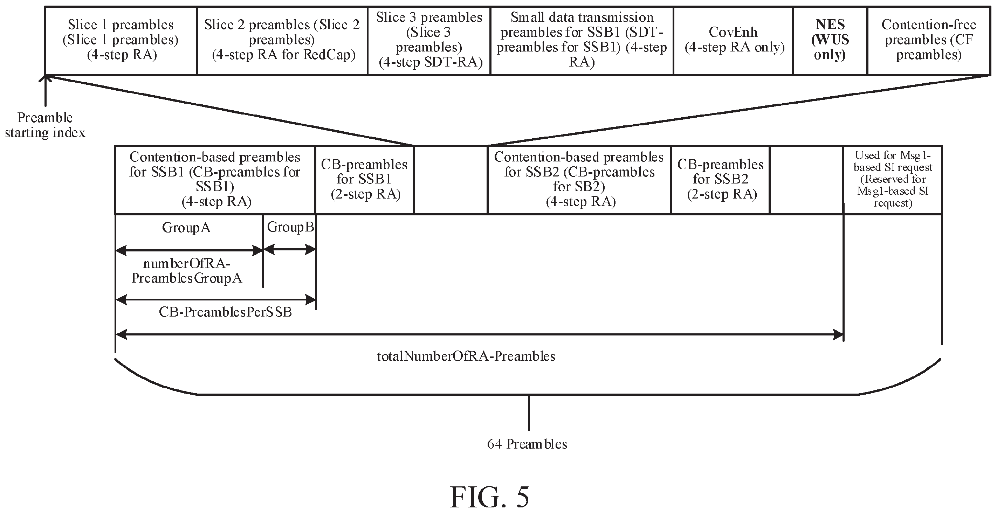

That is, in a preamble configuration, an index of a preamble used for random access is located before an index of a contention-free preamble (for example, a CF preamble), and is located after an index of a preamble used for a coverage enhancement feature (for example, a preamble associated with a coverage enh feature), for example, as shown in FIG. 5.

In addition, sending, by the terminal, the first signal on the target resource based on the first information includes:
determining, by the terminal, a plurality of target resource groups in the target resource, and repeatedly sending the first signal in the plurality of target resource groups; or
repeatedly sending, by the terminal based on a transmission pattern and a quantity of repeated transmissions of a specific time window, the first signal within the specific time window and on a target resource corresponding to the transmission pattern.

That is, when the WUS needs to be repeatedly sent, in one manner, a plurality of target resource groups may be determined in target resources, and then the WUS is repeatedly sent in the plurality of target resource groups. In this case, a quantity of WOs included in one target resource group is equal to a quantity of repeated transmissions of the WUS. In another manner, the network side configures a transmission pattern of a specific time window and a quantity N of repeated transmissions. The transmission pattern is a pattern (pattern) of a WO available within the specific time window, and is used for indicating the WO for repeatedly sending the WUS. In this case, within the specific time window, the WUS is repeatedly sent on the corresponding WO for N times directly based on the transmission pattern. For example, the transmission pattern indicates WOs of a same quantity as the quantity of repeated transmissions, and a periodicity is T.

Optionally, in this embodiment, repeatedly sending, by the terminal, the first signal in the plurality of target resource groups includes:
determining, by the terminal, a starting WO and remaining WOs of a first target resource group within the specific time window; and
determining, by the terminal, a starting WO and remaining WOs of each of remaining target resource groups in the plurality of target resource groups based on the first time domain offset within the specific time window in a case that a mapping relationship exists between the target resource and the SSB; or
determining, by the terminal, a starting WO and remaining WOs of each of remaining target resource groups in the plurality of target resource groups based on the second time domain offset within the specific time window in a case that no mapping relationship exists between the target resource and the SSB.

A quantity of remaining WOs in each target resource group is equal to the quantity of repeated transmissions minus 1.

That is, the terminal first obtains the first target resource group within the specific time window by determining the starting WO and the remaining WOs of the first target resource group. Then, the terminal obtains, based on whether a mapping relationship exists between the target resource and the SSB, a starting WO and remaining WOs of each of remaining target resource groups in the plurality of target resource groups by using an applicable time domain offset, to obtain the remaining target resource groups. In this way, a WO is repeatedly sent in the plurality of target resource groups.

A quantity of WOs included in each target resource group is equal to a quantity of repeated transmissions. After a starting WO is determined, (the quantity of repeated transmissions - 1) remaining WOs further need to be determined.

The starting WO of the first target resource group may be a first WO within the specific time window.

Certainly, if no first time domain offset or no second time domain offset is configured, during determining of the starting WO of each of the remaining target resource groups, within the specific time window, the starting WO of each of the remaining target resource groups is determined in ascending order of frequency domain positions first and then in ascending order of time domain positions.

Optionally, in a case that the target resource is associated with an SSB, the plurality of target resource groups are associated with a same SSB.

For example, when the target resource is associated with the SSB, if a plurality of target resource groups is associated with SSB1, a starting WO of a first target resource group may be a first WO associated with SSB1 within a specific time window, and remaining WOs are (the quantity of repeated transmission - 1) remaining WOs associated with SSB1 in ascending of time domain positions starting from the starting WO.

The following describes, in conjunction with speicific scenarios, the application of the method in the embodiments of this application.

Example 1: The target resource is a target RO, used for random access, of the second cell, and the target RO, used for random access, of the second cell is determined based on a measurement result of a reference signal of the second cell.

Step 1: A network side (for example, a first cell) sends first information to UE, where the first information includes at least one or more of the following: a TDD configuration, ssb-perWUS-OccasionAndNES-PreamblesPerSSB, a RACH resource configuration; or a preamble configuration of a WUS.

The RACH resource configuration includes at least rach-configCommon andRACH-ConfigGeneric. The rach-configCommon includes totalNumberOfRA-Preambles, ssb-perRACH-OccasionAndCB-PreamblesPerSSB, prach-RootSequenceIndex, and rsrp-ThresholdSSB. The RACH-ConfigGeneric includes prach-ConfigurationIndex (a time domain configuration and a preamble format configuration), msg1-FDM (a frequency domain configuration), msg1-FrequencyStart (a frequency domain configuration), preambleReceivedTargetPower, and powerRampingStep.

The preamble configuration of the WUS includes a start index (for example, a start preamble Index) of a target preamble and a quantity of target preambles (for example, a quantity of WUS preambles).

Preambles that can be used for sending the WUS are shown in FIG. 3, FIG. 4, and FIG. 5.

Case A: A preamble that can be used for sending a WUS is considered as an NES feature, and is arranged together with a preamble of an R17 feature combination, as shown in FIG. 5. The preamble configuration of the WUS may follow a configuration of FeatureCombinationPreambles-r17 of R17, as shown below:

```
   FeatureCombinationPreambles-r17 ::= SEQUENCE {
   featureCombination-r17,
   startPreambleForThisPartition-r17 INTEGER (1..64),
   numberOfPreamblesForThisPartition-r17 INTEGER (1..64),
   ssb-SharedRO-MaskIndex-r17 INTEGER (1..15) OPTIONAL, -- Need R
   numberOfRA-PreamblesGroupA-r17 INTEGER (1..64) OPTIONAL, -- Need R
   separateMsgA-PUSCH-Config-r17 MsgA-PUSCH-Config-r16 OPTIONAL, -- Cond
   MsgAConfigCommon
   featureSpecificParameters-r17 SEQUENCE {
   rsrp-ThresholdSSB-r17 RSRP-Range OPTIONAL, -- Need R
   rsrp-ThresholdMsg3-r17 RSRP-Range OPTIONAL, -- Need R
   -- Editor's note: TBD if this parameter indeed can be partition-specific.
   messagePowerOffsetGroupB-r17 ENUMERATED { minusinfinity, dB0, dB5, dB8, dB10,
   dB12, dB15, dB18} OPTIONAL, -- Need R
   ra-SizeGroupA-r17 ENUMERATED {b56, b144, b208, b256, b282, b480, b640, b800,
   b1000, b72, spare6,
   spare5,spare4, spare3, spare2, spare1} OPTIONAL, -- Need R
   deltaPreamble-r17 INTEGER (-1..6) OPTIONAL -- Need R
   }
```

FeatureCombinationPreambles-r17 includes a start preamble index and a quantity of WUS preambles corresponding to the NES feature. To be extended to network energy saving, this architecture may still be used, and only the NES feature needs to be added to FeatureCombination as follows:

```
   FeatureCombination-r17 ::= SEQUENCE {
   redCap ENUMERATED {true} OPTIONAL, -- Need R
   smallData ENUMERATED {true} OPTIONAL, -- Need R
   sliceGroup SliceGroupList-r17 OPTIONAL, -- Need R
   covEnh ENUMERATED {true} OPTIONAL, -- Need R
   NES ENUMERATED {true} OPTIONAL, -- Need R
   ...
   }
```

Case B: For preambles separate from the R17 feature combination, other than the RA preamble, a target preamble (a preamble that can be used for a WUS) is determined based on a start position of a preamble index and/or a quantity of preambles, as shown in FIG. 3 or FIG. 4.

In case B, only a quantity W of WUS preambles may be configured, and a start preamble index can be obtained by 64 - W. Alternatively, a start preamble index is directly configured.

When there is a mapping relationship between ROs and SSBs, and between target preambles (WUS preambles) and SSBs, for a mapping rule, reference may be made to ssb-perRACH-OccasionAndCB-PreamblesPerSSB included in the RACH configuration of the target cell included in the first information, or reference may be made to a parameter configured in the first information and specifically used for sending the WUS, including a quantity of SSBs associated with a WO and a quantity of preambles associated with each SSB (also referred to as a quantity of SSBs per WO and a quantity of WUS preambles per SSB), and may be represented by a new RRC parameter ssb-perWUS-OccasionAndNES-PreamblesPerSSB.

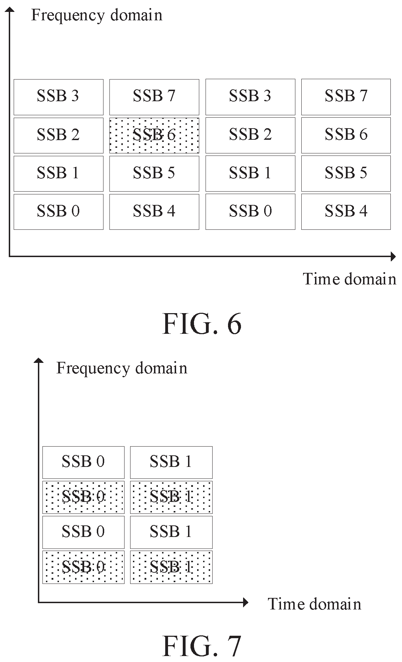

Step 2: The UE selects, based on an SSB measurement result, an RO corresponding to an SSB whose measurement result is greater than rsrp-ThresholdSSB, for sending a WUS, for example, Msg1. As shown in FIG. 6, an RO corresponding to SSB6 is selected to send a WUS. Optionally, the WUS preamble may be determined based on the first information including a start preamble index and a quantity of WUS preambles (for example, totalNumberOfWUSPreambls).

Step 3: The network side sends SIB1 based on a direction of an SSB associated with a WUS RO sent by the UE; or the network side sends SIB1 based on an SSB associated with a WUS RO sent by the UE and directions of a plurality of SSBs near the SSB.

Example 2: The target resource is a target RO, used for random access, of the second cell, and the target RO, used for random access, of the second cell is configured by the network side.

In this example, because an RO associated with a target SSB can be used for both sending a WUS and performing random access, the two functions need to be distinguished in a preamble dimension.

Step 1: A network side sends first information to UE, where the first information includes a TDD configuration, ssb-perWUS-OccasionAndNES-PreamblesPerSSB, a target SSB index, an RO mask, a RACH resource configuration of a target cell, and a preamble configuration of a WUS.

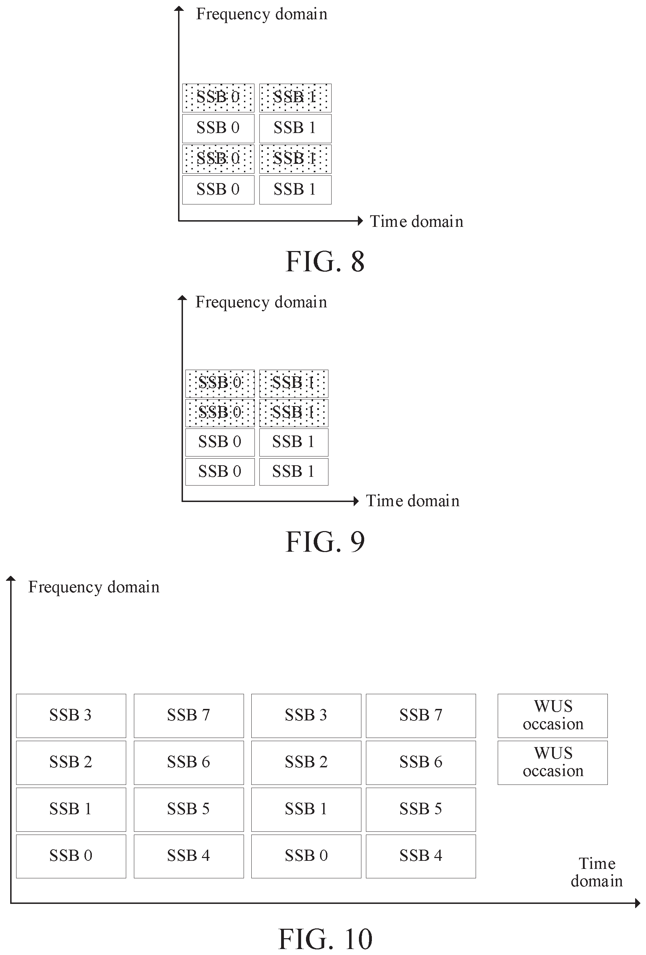

That the first information includes the target SSB index may be understood as that the network side configures an RO that corresponds to the target SSB index and may be used for sending the WUS, and the UE can send the WUS only in the RO corresponding to the target SSB index. The first information includes an RO mask, which may be a mask index, to indicate ROs or a set or a subset of ROs that may be used for sending the WUS. Each mask index indicates one type of selected valid RO. For example, three types of RO masks are shown in FIG. 7, FIG. 8, and FIG. 9. If an RO mask is configured, FIG. 7 means that a first RO and a third RO in ROs associated with each SSB may be used for sending a WUS; FIG. 8 means that a second RO and a fourth RO in ROs associated with each SSB may be used for sending a WUS; and FIG. 9 means that a third RO and a fourth RO in ROs associated with each SSB may be used for sending a WUS. If both an RO mask and a target SSB index are configured, the UE can determine, only based on an RO associated with the target SSB index, and based on the RO mask, an RO for sending a WUS.

The RACH resource configuration of the target cell includes at least rach-configCommon and RACH-ConfigGeneric. The rach-configCommon includes totalNumberOfRA-Preambles, ssb-perRACH-OccasionAndCB-PreamblesPerSSB, prach-RootSequenceIndex, and rsrp-ThresholdSSB. The RACH-ConfigGeneric includes prach-ConfigurationIndex (a time domain configuration and a preamble format configuration), msg1-FDM (a frequency domain configuration), msg1-FrequencyStart (a frequency domain configuration), preambleReceivedTargetPower, and powerRampingStep.

The preamble configuration of the WUS includes a start index (for example, a start preamble Index, which may also be understood as a start position of a preamble) of a target preamble and a quantity of target preambles (for example, a quantity of WUS preambles, or a quantity of preambles).

Step 2: The UE sends, based on the first information (for example, the target SSB index or the RO mask), a WUS (Msg1) on an RO capable of sending the WUS, where optionally, a WUS preamble may be determined based on the first information and a mapping between preambles and SSBs.

Step 3: Determine a direction of sending SIB1:
if the UE sends a WUS on an RO associated with the target SSB index, after receiving the WUS, the base station sends SIB1 in all directions, or the network side sends SIB1 in a direction of a target SSB; or
if the UE sends a WUS on an RO associated with the RO mask, the network side determines, based on an SSB associated with the RO and sent by the UE, the direction of sending SIB1.

Example 3: The target resource is a second resource, which is a resource separate from a RACH resource of the second cell and dedicated to sending the first signal, and the second resource has no mapping with the SSB.

In this example, as shown in FIG. 10, the second resource is referred to as a WUS occasion or a separate RO. The WUS occasion is used only for sending a WUS, without dividing a preamble into a plurality of functions, and all preambles (WUSs) are used for triggering sending of SIB1.

On these WUS occasions, if there is no mapping between SSBs and WUS occasions, that is, these WUS occasions are not associated with an SSB, none of the WUS occasions have any indication of uplink and downlink directionality. In this case, because the WOs are not associated with the SSB, WUS configurations (including a WUS time-frequency resource configuration) may be valid for a plurality of cells, and WUS configurations of cells within an area are the same.

Step 1: When the UE cannot camp on a current cell and needs to perform cell selection, the UE has a WUS configuration, and finds that an energy-saving cell does not send SIB1, and the UE omnidirectionally sends a WUS to the energy-saving cell, to trigger SIB1 sending of the energy-saving cell, to determine whether the UE can camp on the energy-saving cell.

Step 2: The energy-saving cell receives the WUS sent by the UE, and sends a WUS feedback to the UE, where the WUS feedback carries direction information of SIB1 or SSB index information and a RAPID.

Step 3: The UE omnidirectionally receives the WUS feedback.

Step 4: After receiving the WUS feedback, the UE receives the SIB1 based on directional information (SSB index) carried in the WUS feedback, that is, based on a direction of the SSB index.

Example 4: The target resource is a first resource, which is a RACH resource used for random access partition, and there is a mapping relationship between the first resource and the SSB.

In this example, the first resource is referred to as a WUS occasion or a separate RO, and for the WUS occasion, there is still a mapping between the SSB and the WUS occasion.

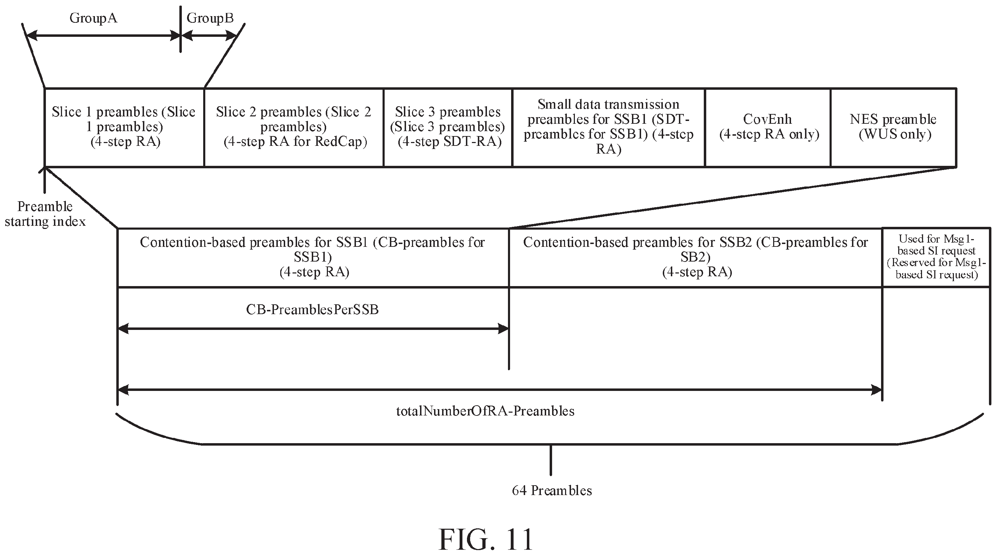

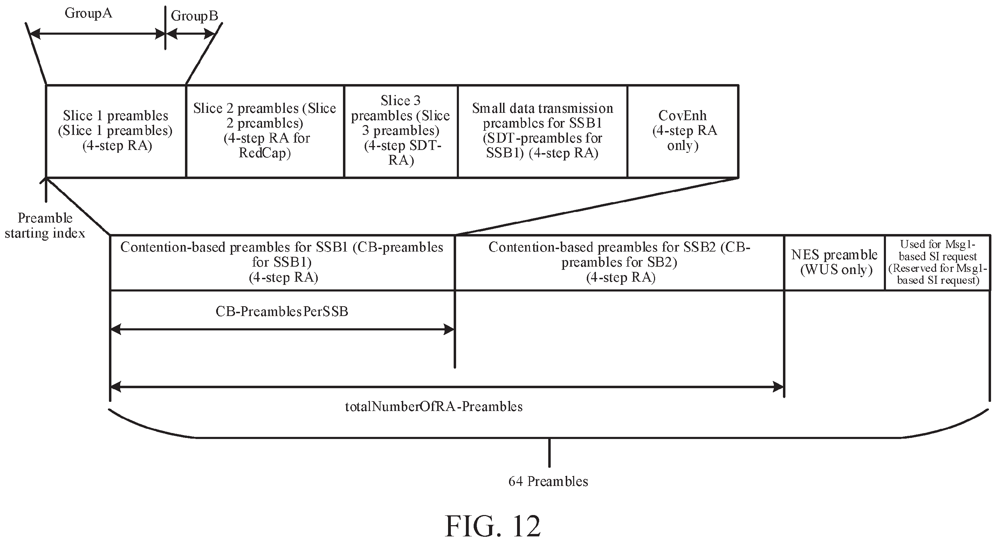

Because in R17, a separate RO for RA partition mechanism is designed, this example is extended under the R17 framework. In R17, in case of a separate RO for RA partitioning, preambles configured on the separate RO can be associated with only R17 and R18 features, and some preambles may be selected to serve as WUS preambles, as shown in FIG. 11 and FIG. 12.

As shown in FIG. 11 and FIG. 12, for an allocation method of two WUS preambles, reference may be made to a configuration framework of R17, and an NES feature is added to a feature combination; or a starting number of the preambles and a quantity of the preambles are separately configured.

Step 1: UE sends, based on a configuration of first information and an SSB measurement result, a WUS to an energy-saving cell on a WUS occasion associated with a selected SSB, to trigger SIB1 sending of the energy-saving cell, where the first information includes a RACH resource configuration of a target cell and a preamble configuration of the WUS.

The RACH resource configuration of the target cell includes at least rach-configCommon and RACH-ConfigGeneric. The rach-configCommon includes totalNumberOfRA-Preambles, ssb-perRACH-OccasionAndCB-PreamblesPerSSB, prach-RootSequenceIndex, and rsrp-ThresholdSSB. The RACH-ConfigGeneric includes prach-ConfigurationIndex (a time domain configuration and a preamble format configuration), msg1-FDM (a frequency domain configuration), msg1-FrequencyStart (a frequency domain configuration), preambleReceivedTargetPower, and powerRampingStep.

The preamble configuration of the WUS includes a start index (for example, a start preamble Index) of a target preamble and a quantity of target preambles (for example, a quantity of WUS preambles).

Step 2: The UE receives the successfully triggered SIB1 based on a direction of an SSB associated with an RO for sending the WUS.

Example 5: Configuration combined with a feature combination.

An NES feature is added to FeatureCombination:

```
   FeatureCombination-r19 ::= SEQUENCE {
   redCap ENUMERATED {true} OPTIONAL, -- Need R
   smallData ENUMERATED {true} OPTIONAL, -- Need R
   sliceGroup SliceGroupList-r17 OPTIONAL, -- Need R
   covEnh ENUMERATED {true} OPTIONAL, -- Need R
   NES ENUMERATED {true} OPTIONAL, -- Need R
   }
```

A start position of a preamble corresponding to the NES feature, a quantity of preambles, an RO mask, and a target threshold, for example, an RSRP threshold used for selecting an SSB, are configured in FeatureCombinationPreambles:

```
   FeatureCombinationPreambles-r19 ::= SEQUENCE {
   featureCombination-r19 FeatureCombination-r19,
   startPreambleForThisPartition-r19 INTEGER (1..64),
   numberOfPreamblesForThisPartition-r19 INTEGER (1..64),
   ssb-SharedRO-MaskIndex-r19 INTEGER (1..15) OPTIONAL, -- Need R
   featureSpecificParameters-r19 SEQUENCE {
   rsrp-ThresholdSSB-r19 RSRP-Range OPTIONAL, -- Need R
   -- Editor's note: TBD if this parameter indeed can be partition-specific.
   }
```

Example 6: A plurality of RO masks are configured to determine one or more ROs of WUSs of different purposes.

Each SSB is associated with eight ROs. A network side sends first information to UE. The first information includes four RO masks (Indexes), which is also referred to as being configured with four RO masks (Indexes). Each RO mask corresponds to WUSs of different purposes to send a set of optional ROs:

configuring an RO mask Index of a first purpose, that is, PRACH Mask Index for SIB1 transmission =1, which indicates that a first RO among eight ROs associated with one SSB may be used for sending a WUS, to trigger sending of SIB1;

configuring an RO mask Index of a second purpose, that is, PRACH Mask Index for SSB adaptation =2, which indicates that a second RO among eight ROs associated with one SSB may be used for sending a WUS, to trigger SSB adaptation;

configuring an RO mask Index of a third purpose, that is, PRACH Mask Index for SIB1 transmission =3, which indicates that a third RO among eight ROs associated with one SSB may be used for sending a WUS, to trigger RO adaptation; and

configuring an RO mask Index of a fourth purpose, that is, PRACH Mask Index for SIB1 transmission =4, which indicates that a fourth RO among eight ROs associated with one SSB may be used for sending a WUS, to trigger paging adaptation.

### Example 7: WUS repetition (repetition).

If a WO has a mapping with an SSB, a rule for determining a WO with WUS repetition is the same as a rule for determining an occasion with PRACH repetition. However, a network side configures specific parameters (specific parameters) of a WUS for UE, including at least a quantity of repeated transmissions (that is, a quantity of WUS repetitions) and a first time domain offset (time offset for WUS). The first time domain offset is used for determining a quantity of WOs that are associated with a same SSB and spaced between two WO groups. Specifically,

it is assumed that the quantity of WUS repetitions is W (which is configured or indicated by the network side, where an RRC parameter N_preamble^rep may be reused, or a separately configured parameter may be used), and a target resource group (WO (WUS occasion) group) within a specific time window (time window X) is determined as follows: first, a starting WO (starting WO) of a first WO group is determined, and then remaining W-1 WOs of the first WO group are determined. Then, a starting WO of each of other WO groups and remaining WOs of the WO group are sequentially determined. Remaining W-1 WOs in each WO group are WOs associated with a same SSB, a same frequency position, and a same associated Preamble set as a starting WO. After the first WO group is determined, determining of the remaining WO groups is related to whether a first time domain offset is configured. An objective of introducing the first time domain offset is to reduce a quantity of WOs to be detected on the network side to reduce pressure.

If no first time domain offset is configured, for each SSB, a first valid WO within the time window X is used as a starting WO (starting WO) of a first WO group, and the first WO group is determined based on the starting WO. Then, on other WOs than the determined WO group, starting WOs of subsequent WO groups are determined within the time window X in ascending order of frequency domain positions first and then in ascending order of time domain positions, and the subsequent WO groups are further determined.

If a first time domain offset is configured, for each SSB, a first valid WO found within the time window X in an order of frequency domain followed by time domain is used as a starting WO of a first WO group, and then the first WO group is determined based on the starting WO. Then, on other WOs than the determined WO group, starting WOs of subsequent WO groups are determined in an order of frequency domain followed by time domain and the corresponding WO groups are determined. A starting WO of an n^{th} WO group associated with a same SSB at a same frequency position is a WO whose distance from a starting WO of an (n-1)^{th} WO group is the first time domain offset. A definition of the first time domain offset is a quantity of WOs associated with a same SSB in time domain.

Certainly, if there is no mapping between an occasion for sending a WUS and an SSB, a WO (WUS occasion) group that can be used for sending a WUS repetition within the time window X is determined as follows:
Step 1: First, determine a first WO group, where a determining manner is:
starting from a first WO (a WO whose time domain position is the earliest and frequency domain position is the lowest), N consecutive WUS occasions having a same frequency domain position in ascending order in time domain; or
starting from a first WO (a WO whose time domain position is the earliest and frequency domain position is the lowest), N consecutive WUS occasions having a same time domain position in ascending order in frequency domain; or
starting from a first WO (a WO whose time domain position is the earliest and frequency domain position is the lowest), N consecutive WUS occasions in ascending order in frequency domain first and then in ascending order in time domain; or
a WO pattern configured on a network side, including N WUS occasions. The Pattern may be configured by the network side. For example, a WO having an index being an odd number or an RO having an index being an even number may be used for sending a WUS repetition, or an RO index is configured.

Step 2: Then, sequentially determine other WO groups:
a starting WO of an n^{th} WO group is a WO whose distance from a starting WO of an (n-1)^{th} WO group is a second time domain offset. The foregoing second time domain offset may be configured by the network side. For example, the first information includes the second time domain offset.

Certainly, if there is no mapping between an occasion for sending a WUS and an SSB, a WO (WUS occasion) that can be used for sending a WUS repetition within the time window X is determined as follows:
The network side configures a transmission pattern (occasion pattern) that can be used for sending a WUS repetition within the time window X, and a quantity of repeated transmissions (that is, a quantity of WUS repetitions), and the UE determines a corresponding occasion based on the configuration on the network side.

In conclusion, according to the method in this embodiment of this application, a terminal can obtain, from a first cell or a second cell, first information used for determining at least one of a target resource, a first signal, or a second cell, and then send the first signal on the target resource based on the first information, to trigger or request at least one of SIB adaptation, SSB adaptation, RO adaptation, or paging adaptation of the second cell, thereby meeting a communication requirement between the terminal and a network.

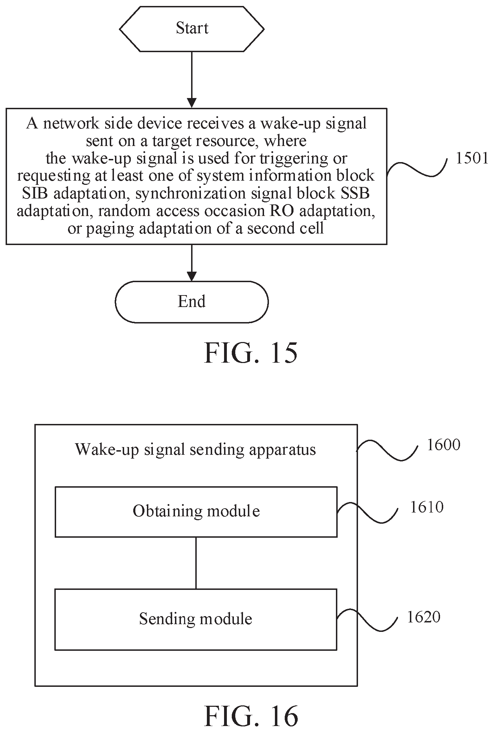

As shown in FIG. 15, a signal receiving method of an embodiment of this application includes the following steps:
Step 1501: A network side device receives a first signal sent on a target resource, where
the first signal is used for triggering or requesting at least one of system information block SIB adaptation, synchronization signal block SSB adaptation, random access occasion RO adaptation, or paging adaptation of a second cell; and
the target resource includes at least one of the following:
a target random access channel occasion RO, used for random access, of the second cell;
a first resource, which is a random access channel RACH resource used for random access partition; or
a second resource, which is a resource separate from a RACH resource of the second cell and dedicated to sending the first signal.

The network side device receives a first signal that can be sent by a terminal on a target resource, to trigger or request at least one of SIB adaptation, SSB adaptation, RO adaptation, or paging adaptation of a second cell, thereby meeting a communication requirement between the terminal and a network. The terminal obtains, from a first cell or the second cell, first information used for determining at least one of the target resource, the first signal, or the second cell, and sends the first signal on the target resource based on the first information.

In this embodiment, the network side device is the second cell, or a base station to which the second cell belongs.

Optionally, the target RO, used for random access, of the second cell is determined based on a measurement result of a reference signal of the second cell; or
the target RO, used for random access, of the second cell is determined by an RO mask; or
the target RO, used for random access, of the second cell is an RO associated with a target SSB index, where
the RO mask and the target SSB index are included in first information or configured by a network side.

Optionally, the target RO, for random access, of the second cell is an RO corresponding to a reference signal having a best measurement result among reference signals of the second cell; or
the target RO, used for random access, of the second cell is an RO corresponding to a reference signal whose measurement result is greater than a target threshold among reference signals of the second cell, where the target threshold is configured by the network side or included in the first information, and a plurality of target thresholds and first signals of different purposes are mapped one to one.

Optionally, the RO mask is used for indicating one or more ROs that are allowed to send the first signal among ROs associated with each SSB, or is used for indicating one or more ROs that are allowed to send the first signal among ROs associated with the target SSB index.

Optionally, there are one or more RO masks, and when there are a plurality of RO masks, the plurality of RO masks are used for determining one or more ROs of first signals of different purposes.

Optionally, the second resource includes a plurality of sets of resources used for the first signals of different purposes.

Optionally, no mapping relationship between SSBs and ROs exists in the second resource.

Optionally, the first signal is one of target preambles, configured by the network side, that can be used for sending the first signal, and the target preamble includes at least one of the following:
a preamble not used for random access; or
a preamble used for random access.

Optionally, an index of the preamble not used for random access is located before or after an index of a preamble used for a system information request.

Optionally, an index of the preamble used for random access is located before an index of a contention-free preamble and after an index of a preamble used for a coverage enhancement feature.

It should be noted that the first signal being sent on the target resource is determined by the terminal based on the first information, the implementation of the first information is described in the previous embodiment, and details are not described herein again.

Certainly, if the terminal repeatedly sends the first signal, the network side device can also determine a plurality of target resource groups, or a transmission pattern of a specific time window and a quantity of repeated transmissions, as implemented on the terminal side in the previous embodiment, to receive the repeatedly sent first signal. Details are omitted herein.

It should be noted that the method is implemented in conjunction with the foregoing method performed by the terminal. The implementation of the foregoing method embodiment is applicable to the method, and the same technical effects can also be achieved.

The signal sending method provided in the embodiments of this application may be performed by a signal sending apparatus. In the embodiments of this application, the signal sending apparatus provided in the embodiments of this application is described by using an example in which the signal sending apparatus performs the signal sending method.

As shown in FIG. 16, a signal sending apparatus 1600 of an embodiment of this application includes:

an obtaining module 1610, configured to obtain first information from a first cell or a second cell; and

a sending module 1620, configured to send a first signal on a target resource based on the first information.

The first signal is used for triggering or requesting at least one of system information block SIB adaptation, synchronization signal block SSB adaptation, random access occasion RO adaptation, or paging adaptation of the second cell.

The first information is used for determining at least one of the target resource, the first signal, or the second cell.

The target resource includes at least one of the following:
a target random access channel occasion RO, used for random access, of the second cell;
a first resource, which is a random access channel RACH resource used for random access partition; or
a second resource, which is a resource separate from a RACH resource of the second cell and dedicated to sending the first signal.

The apparatus can obtain, from the first cell or the second cell, the first information used for determining at least one of the target resource, the first signal, or the second cell, and then send the first signal on the target resource based on the first information, to trigger or request at least one of SIB adaptation, SSB adaptation, RO adaptation, or paging adaptation of the second cell, thereby meeting a communication requirement between a terminal and a network.

Optionally, the target RO, used for random access, of the second cell is determined based on a measurement result of a reference signal of the second cell; or
the target RO, used for random access, of the second cell is determined by an RO mask; or
the target RO, used for random access, of the second cell is an RO associated with a target SSB index, where
the RO mask and the target SSB index are included in first information or configured by a network side.

Optionally, the target RO, for random access, of the second cell is an RO corresponding to a reference signal having a best measurement result among reference signals of the second cell; or
the target RO, used for random access, of the second cell is an RO corresponding to a reference signal whose measurement result is greater than a target threshold among reference signals of the second cell. The target threshold is configured by the network side or included in the first information, and a plurality of target thresholds and first signals of different purposes are mapped one to one.

Optionally, the RO mask is used for indicating one or more ROs that are allowed to send the first signal among ROs associated with each SSB, or is used for indicating one or more ROs that are allowed to send the first signal among ROs associated with the target SSB index.

Optionally, there are one or more RO masks, and when there are a plurality of RO masks, the plurality of RO masks are used for determining one or more ROs of first signals of different purposes.

Optionally, the second resource includes a plurality of sets of resources used for the first signals of different purposes.

Optionally, no mapping relationship between SSBs and ROs exists in the second resource.

Optionally, the first signal is one of target preambles, configured by a network side device, that can be used for sending the first signal, and the target preamble includes at least one of the following:
a preamble not used for random access; or
a preamble used for random access.

Optionally, an index of the preamble not used for random access is located before or after an index of a preamble used for a system information request.

Optionally, an index of the preamble used for random access is located before an index of a contention-free preamble and after an index of a preamble used for a coverage enhancement feature.

Optionally, the first information includes at least one of the following:
related information of the second cell;
configuration information of the first signal;
target threshold information used for determining the target resource;
a target SSB index;
time division duplex TDD configuration information;
random access configuration information;
additional random access common configuration information; or
an RO mask.

Optionally, the related information of the second cell includes at least one of the following:
a timing or a system frame number SFN;
a timing offset from the first cell;
an SSB burst pattern and periodicity;
SSB transmit power;
a timing advance offset; or
a frequency of the second cell.

Optionally, the configuration information of the first signal includes at least one of the following:
a time-frequency domain resource configuration; or
a preamble-related configuration.

Optionally, the preamble-related configuration includes at least one of the following:
a preamble format;
a quantity of repeated transmissions;
an occasion pattern for repeated transmissions;
a first time domain offset, used for indicating a quantity of first signal occasions WOs spaced between adjacent target resource groups associated with a same SSB;
a second time domain offset, used for indicating a quantity of WOs spaced between adjacent target resource groups;
a preamble root sequence;
a quantity of target preambles;
a start index of the target preamble;
an end index of the target preamble;
a quantity of SSBs associated with the WO, and a quantity of preambles associated with each SSB;
a feature combination preamble configuration;
a feature in a feature combination; or
a feature priority.

Optionally, the target threshold information includes at least one of the following:
a first threshold, where the first threshold is an SSB target threshold to which reference is made when an RO is selected for random access;
a second threshold, where the second threshold is an SSB target threshold to which reference is made when a first signal of a first purpose is sent, and the first purpose is to trigger or request SIB adaptation of the second cell;
a third threshold, where the third threshold is an SSB target threshold to which reference is made when a first signal of a second purpose is sent, and the second purpose is to trigger or request SSB adaptation of the second cell;
a fourth threshold, where the fourth threshold is an SSB target threshold to which reference is made when a first signal of a third purpose is sent, and the third purpose is to trigger or request RO adaptation of the second cell; or
a fifth threshold, where the fifth threshold is an SSB target threshold to which reference is made when a first signal of a fourth purpose is sent, and the fourth purpose is to trigger or request paging adaptation of the second cell.

Optionally, the random access configuration information includes at least one of a random access common configuration and a random access generic configuration.

The random access common configuration includes at least one of the following:
a total quantity of random access preambles;
a quantity of SSBs associated with each RO and a quantity of preambles associated with each SSB;
a physical random access channel PRACH root sequence index; or
an SSB target threshold to which reference is made when an RO is selected for random access.

The random access generic configuration includes at least one of the following:
a PRACH configuration index;
a frequency division multiplexing FDM configuration of a contention-based first random access message Msg1;
a frequency domain start position of Msg1;
preamble received target power; or
a power ramping step.

Optionally, the RO mask includes one of the following:
first indication information, used for indicating a start index and quantity of one or more ROs that are allowed to send the first signal among ROs associated with each SSB, where among the ROs associated with each SSB, indexs of the ROs are numbered in an order of frequency domain followed by time domain;
second indication information, used for indicating parity of indexs of one or more ROs that are allowed to send the first signal among ROs associated with each SSB; or
third indication information, used for indicating a quantity of one or more ROs that are allowed to send the first signal among ROs associated with each SSB, where a starting RO is a default RO.

Optionally, the sending module is further configured to:
determine a plurality of target resource groups in the target resource, and repeatedly send the first signal in the plurality of target resource groups; or
repeatedly send, based on a transmission pattern and a quantity of repeated transmissions of a specific time window, the first signal within the specific time window and on a target resource corresponding to the transmission pattern.

Optionally, the sending module is further configured to:
determine a starting WO and remaining WOs of a first target resource group within the specific time window; and
determine a starting WO and remaining WOs of each of remaining target resource groups in the plurality of target resource groups based on a first time domain offset within the specific time window in a case that a mapping relationship exists between the target resource and an SSB; or
determine a starting WO and remaining WOs of each of remaining target resource groups in the plurality of target resource groups based on a second time domain offset within the specific time window in a case that no mapping relationship exists between the target resource and an SSB, where
a quantity of remaining WOs in each target resource group is equal to the quantity of repeated transmissions minus 1.

Optionally, in a case that the target resource is associated with an SSB, the plurality of target resource groups are associated with a same SSB.

The signal sending apparatus in this embodiment of this application may be an electronic device, for example, an electronic device with an operating system, or may be a component in the electronic device, for example, an integrated circuit or a chip. The electronic device may be a terminal or a device other than the terminal. For example, the terminal may include, but is not limited to, the types of the terminal 11 listed above, and the another device may be a server, a network attached storage (Network Attached Storage, NAS), or the like. This is not specifically limited in this embodiment of this application.

The signal sending apparatus provided in this embodiment of this application can implement the processes implemented in the method embodiments illustrated in FIG. 2 to FIG. 12 and achieve the same technical effects. To avoid repetition, details are not described herein again.

The signal receiving method provided in the embodiments of this application may be performed by a signal receiving apparatus. In the embodiments of this application, the signal receiving apparatus provided in the embodiments of this application is described by using an example in which the signal receiving apparatus performs the signal receiving method.

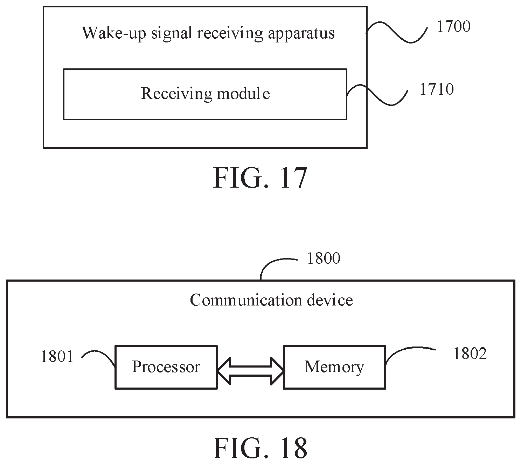

As shown in FIG. 17, a signal receiving apparatus 1700 of an embodiment of this application includes:
a receiving module 1710, configured to receive a first signal sent on a target resource.

The first signal is used for triggering or requesting at least one of system information block SIB adaptation, synchronization signal block SSB adaptation, random access occasion RO adaptation, or paging adaptation of a second cell.

The target resource includes at least one of the following:
a target random access channel occasion RO, used for random access, of the second cell;
a first resource, which is a separate random access channel RACH resource used for random access partition; or
a second resource, which is a resource separate from a RACH resource of the second cell and dedicated to sending the first signal.

The apparatus receives a first signal that can be sent by a terminal on a target resource, to trigger or request at least one of SIB adaptation, SSB adaptation, RO adaptation, or paging adaptation of a second cell, thereby meeting a communication requirement between the terminal and a network. The terminal obtains, from a first cell or the second cell, first information used for determining at least one of the target resource, the first signal, or the second cell, and sends the first signal on the target resource based on the first information.

Optionally, the target RO, used for random access, of the second cell is determined based on a measurement result of a reference signal of the second cell; or
the target RO, used for random access, of the second cell is determined by an RO mask; or
the target RO, used for random access, of the second cell is an RO associated with a target SSB index, where
the RO mask and the target SSB index are included in first information or configured by a network side.

Optionally, the target RO, for random access, of the second cell is an RO corresponding to a reference signal having a best measurement result among reference signals of the second cell; or
the target RO, used for random access, of the second cell is an RO corresponding to a reference signal whose measurement result is greater than a target threshold among reference signals of the second cell. The target threshold is configured by the network side or included in the first information, and a plurality of target thresholds and first signals of different purposes are mapped one to one.

Optionally, the RO mask is used for indicating one or more ROs that are allowed to send the first signal among ROs associated with each SSB, or is used for indicating one or more ROs that are allowed to send the first signal among ROs associated with the target SSB index.

Optionally, there are one or more RO masks, and when there are a plurality of RO masks, the plurality of RO masks are used for determining one or more ROs of first signals of different purposes.

Optionally, the second resource includes a plurality of sets of resources used for the first signals of different purposes.

Optionally, no mapping relationship between SSBs and ROs exists in the second resource.

Optionally, the first signal is one of target preambles, configured by the network side, that can be used for sending the first signal, and the target preamble includes at least one of the following:
a preamble not used for random access; or
a preamble used for random access.

Optionally, an index of the preamble not used for random access is located before or after an index of a preamble used for a system information request.

Optionally, an index of the preamble used for random access is located before an index of a contention-free preamble and after an index of a preamble used for a coverage enhancement feature.

The signal sending apparatus provided in the embodiments of this application can implement the processes implemented in the method embodiments illustrated in FIG. 15 and achieve the same technical effects. To avoid repetition, details are not described herein again.

As shown in FIG. 18, an embodiment of this application further provides a communication device 1800, including a processor 1801 and a memory 1802. The memory 1802 stores a program or an instruction executable in the processor 1801. For example, when the communication device 1800 is a terminal, the program or the instruction, when executed by the processor 1801, implements the steps of the foregoing embodiment of the signal sending method, and the same technical effects can be achieved. When the communication device 1800 is a network side device, the program or the instruction, when executed by the processor 1801, implements the steps of the foregoing embodiment of the signal receiving method, and the same technical effects can be achieved. To avoid repetition, details are not described herein again.

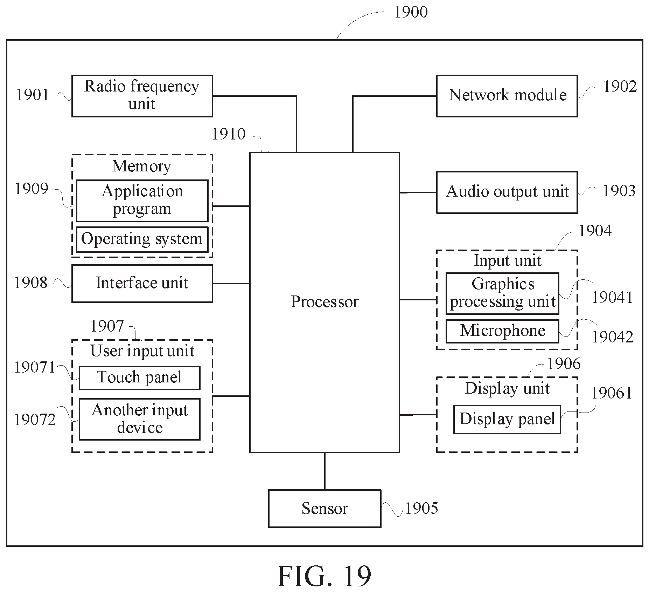

An embodiment of this application further provides a terminal, including a processor and a communication interface. The communication interface is coupled to the processor. The processor is configured to run a program or an instruction, to implement the steps of the method embodiment shown in FIG. 2. This terminal embodiment corresponds to the foregoing terminal-side method embodiment. Implementation processes and implementations of the foregoing method embodiment all may be applied to this terminal embodiment, and the same technical effects can be achieved. Specifically, FIG. 19 is a diagram of a hardware structure of a terminal that implements the embodiments of this application.

The terminal 1900 includes but is not limited to at least some components of a radio frequency unit 1901, a network module 1902, an audio output unit 1903, an input unit 1904, a sensor 1905, a display unit 1906, a user input unit 1907, an interface unit 1908, a memory 1909, and a processor 1910.

A person skilled in the art may understand that the terminal 1900 may further include a power supply (for example, a battery) that supplies power to the components. The power supply may be logically connected to the processor 1910 through a power management system, to implement functions such as management of charging, discharging, and power consumption through the power management system. The terminal structure shown in FIG. 19 constitutes no limitation on the terminal. The terminal may include more or fewer components than those shown in the figure, or some components may be combined, or a different component deployment may be used. Details are not described herein.

It should be understood that, in this embodiment of this application, the input unit 1904 may include a graphics processing unit (Graphics Processing Unit, GPU) 19041 and a microphone 19042. The graphics processing unit 19041 processes image data of a static picture or a video that is obtained by an image capture apparatus (for example, a camera) in a video capture mode or an image capture mode. The display unit 1906 may include a display panel 19061. The display panel 19061 may be configured in a form of a liquid crystal display, an organic light-emitting diode, or the like. The user input unit 1907 includes at least one of a touch panel 19071 and another input device 19072. The touch panel 19071 is also referred to as a touchscreen. The touch panel 19071 may include two parts: a touch detection apparatus and a touch controller. The another input device 19072 may include, but is not limited to, a physical keyboard, a functional button (for example, a sound volume control button or a power button), a trackball, a mouse, or a joystick. Details are not described herein.

In this embodiment of this application, after receiving downlink data from a network side device, the radio frequency unit 1901 may transmit the downlink data to the processor 1910 for processing. In addition, the radio frequency unit 1901 may send uplink data to the network side device. Usually, the radio frequency unit 1901 includes, but is not limited to, an antenna, an amplifier, a transceiver, a coupler, a low noise amplifier, a duplexer, and the like.

The memory 1909 may be configured to store a software program, an instruction and various types of data. The memory 1909 may mainly include a first storage area storing a program or an instruction and a second storage area storing data. The first storage area may store an operating system, an application program or an instruction required by at least one function (for example, a sound playing function or an image playing function), and the like. In addition, the memory 1909 may include a volatile memory or non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1909 in this embodiment of this application includes, but is not limited to, these memories and any other suitable types of memories.

The processor 1910 may include one or more processing units. Optionally, the processor 1910 integrates an application processor and a modem processor. The application processor mainly processes operations related to the operating system, a user interface, the application program, and the like. The modem processor mainly processes a wireless communication signal, and is, for example, a baseband processor. It may be understood that the modem processor may alternatively not be integrated in the processor 1910.

The radio frequency unit 1901 is configured to obtain first information from a first cell or a second cell; and
send a first signal on a target resource based on the first information.

The first signal is used for triggering or requesting at least one of system information block SIB adaptation, synchronization signal block SSB adaptation, random access occasion RO adaptation, or paging adaptation of the second cell.

The first information is used for determining at least one of the target resource, the first signal, or the second cell.

The target resource includes at least one of the following:
a target random access channel occasion RO, used for random access, of the second cell;
a first resource, which is a random access channel RACH resource used for random access partition; or
a second resource, which is a resource separate from a RACH resource of the second cell and dedicated to sending the first signal.

The terminal can obtain, from the first cell or the second cell, the first information used for determining at least one of the target resource, the first signal, or the second cell, and then send the first signal on the target resource based on the first information, to trigger or request at least one of the SIB adaptation, the SSB adaptation, the RO adaptation, or the paging adaptation of the second cell, thereby meeting a communication requirement between the terminal and a network.

Optionally, the target RO, used for random access, of the second cell is determined based on a measurement result of a reference signal of the second cell; or
the target RO, used for random access, of the second cell is determined by an RO mask; or
the target RO, used for random access, of the second cell is an RO associated with a target SSB index, where
the RO mask and the target SSB index are included in the first information or configured by a network side.

Optionally, the target RO, for random access, of the second cell is an RO corresponding to a reference signal having a best measurement result among reference signals of the second cell; or
the target RO, used for random access, of the second cell is an RO corresponding to a reference signal whose measurement result is greater than a target threshold among reference signals of the second cell. The target threshold is configured by the network side or included in the first information, and a plurality of target thresholds and first signals of different purposes are mapped one to one.

Optionally, the RO mask is used for indicating one or more ROs that are allowed to send the first signal among ROs associated with each SSB, or is used for indicating one or more ROs that are allowed to send the first signal among ROs associated with the target SSB index.

Optionally, there are one or more RO masks, and when there are a plurality of RO masks, the plurality of RO masks are used for determining one or more ROs of first signals of different purposes.

Optionally, the second resource includes a plurality of sets of resources used for the first signals of different purposes.

Optionally, no mapping relationship between SSBs and ROs exists in the second resource.

Optionally, the first signal is one of target preambles, configured by the network side, that can be used for sending the first signal, and the target preamble includes at least one of the following:
a preamble not used for random access; or
a preamble used for random access.

Optionally, an index of the preamble not used for random access is located before or after an index of a preamble used for a system information request.

Optionally, an index of the preamble used for random access is located before an index of a contention-free preamble and after an index of a preamble used for a coverage enhancement feature.

Optionally, the first information includes at least one of the following:
related information of the second cell;
configuration information of the first signal;
target threshold information used for determining the target resource;
a target SSB index;
time division duplex TDD configuration information;
random access configuration information;
additional random access common configuration information; or
an RO mask.

Optionally, the related information of the second cell includes at least one of the following:
a timing or a system frame number SFN;
a timing offset from the first cell;
an SSB burst pattern and periodicity;
SSB transmit power;
a timing advance offset; or
a frequency of the second cell.

Optionally, the configuration information of the first signal includes at least one of the following:
a time-frequency domain resource configuration; or
a preamble-related configuration.

Optionally, the preamble-related configuration includes at least one of the following:
a preamble format;
a quantity of repeated transmissions;
an occasion pattern for repeated transmissions;
a first time domain offset, used for indicating a quantity of first signal occasions WOs spaced between adjacent target resource groups associated with a same SSB;
a second time domain offset, used for indicating a quantity of WOs spaced between adjacent target resource groups;
a preamble root sequence;
a quantity of target preambles;
a start index of the target preamble;
an end index of the target preamble;
a quantity of SSBs associated with the WO, and a quantity of preambles associated with each SSB;
a feature combination preamble configuration;
a feature in a feature combination; or
a feature priority.

Optionally, the target threshold information includes at least one of the following:
a first threshold, where the first threshold is an SSB target threshold to which reference is made when an RO is selected for random access;
a second threshold, where the second threshold is an SSB target threshold to which reference is made when a first signal of a first purpose is sent, and the first purpose is to trigger or request SIB adaptation of the second cell;
a third threshold, where the third threshold is an SSB target threshold to which reference is made when a first signal of a second purpose is sent, and the second purpose is to trigger or request SSB adaptation of the second cell;
a fourth threshold, where the fourth threshold is an SSB target threshold to which reference is made when a first signal of a third purpose is sent, and the third purpose is to trigger or request RO adaptation of the second cell; or
a fifth threshold, where the fifth threshold is an SSB target threshold to which reference is made when a first signal of a fourth purpose is sent, and the fourth purpose is to trigger or request paging adaptation of the second cell.

Optionally, the random access configuration information includes at least one of a random access common configuration and a random access generic configuration.

The random access common configuration includes at least one of the following:
a total quantity of random access preambles;
a quantity of SSBs associated with each RO and a quantity of preambles associated with each SSB;
a physical random access channel PRACH root sequence index; or
an SSB target threshold to which reference is made when an RO is selected for random access.

The random access generic configuration includes at least one of the following:
a PRACH configuration index;
a frequency division multiplexing FDM configuration of a contention-based first random access message Msg1;
a frequency domain start position of Msg1;
preamble received target power; or
a power ramping step.

Optionally, the RO mask includes one of the following:
first indication information, used for indicating a start index and quantity of one or more ROs that are allowed to send the first signal among ROs associated with each SSB, where among the ROs associated with each SSB, indexs of the ROs are numbered in an order of frequency domain followed by time domain;
second indication information, used for indicating parity of indexs of one or more ROs that are allowed to send the first signal among ROs associated with each SSB; or
third indication information, used for indicating a quantity of one or more ROs that are allowed to send the first signal among ROs associated with each SSB, where a starting RO is a default RO.

Optionally, the radio frequency unit is further configured to:
determine a plurality of target resource groups in the target resource, and repeatedly send the first signal in the plurality of target resource groups; or
repeatedly send, based on a transmission pattern and a quantity of repeated transmissions of a specific time window, the first signal within the specific time window and on a target resource corresponding to the transmission pattern.

Optionally, the processor is configured to:
determine a starting WO and remaining WOs of a first target resource group within the specific time window; and
determine a starting WO and remaining WOs of each of remaining target resource groups in the plurality of target resource groups based on a first time domain offset within the specific time window in a case that a mapping relationship exists between the target resource and an SSB; or
determine a starting WO and remaining WOs of each of remaining target resource groups in the plurality of target resource groups based on a second time domain offset within the specific time window in a case that no mapping relationship exists between the target resource and an SSB.

A quantity of remaining WOs in each target resource group is equal to the quantity of repeated transmissions minus 1.

Optionally, in a case that the target resource is associated with an SSB, the plurality of target resource groups are associated with a same SSB.

It may be understood that, for implementation processes of various implementations mentioned in this embodiment, reference may be made to related descriptions in the method embodiments, and the same or corresponding technical effects are achieved. To avoid repetition, details are not described herein again.

An embodiment of this application further provides a network side device, including a processor and a communication interface. The communication interface is coupled to the processor, and the processor is configured to run a program or an instruction, to implement the steps of the method embodiment shown in FIG. 15. This network side device embodiment corresponds to the foregoing network side device method embodiment. Implementation processes and implementations of the foregoing method embodiment may all be applied to this network side device embodiment, and the same technical effects can be achieved.

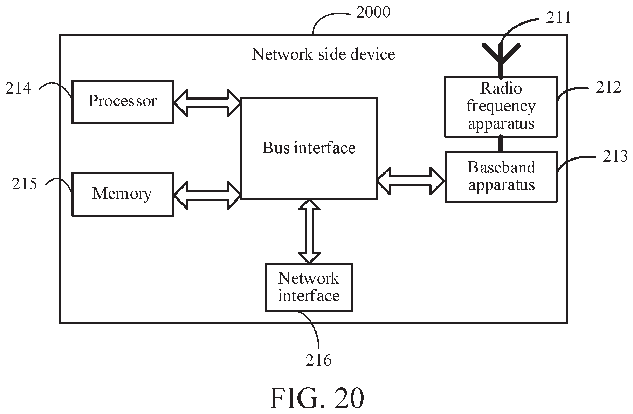

Specifically, an embodiment of this application further provides a network side device. As shown in FIG. 20, the network side device 2000 includes an antenna 211, a radio frequency apparatus 212, a baseband apparatus 213, a processor 214, and a memory 215. The antenna 211 is connected to the radio frequency apparatus 212. In an uplink direction, the radio frequency apparatus 212 receives information through the antenna 211, and sends the received information to the baseband apparatus 213 for processing. In a downlink direction, the baseband apparatus 213 processes and sends to-be-sent information to the radio frequency apparatus 212, and the radio frequency apparatus 212 processes received information and sends out the information through the antenna 211.

The method performed by the network side device in the foregoing embodiment may be implemented in the baseband apparatus 213. The baseband apparatus 213 includes a baseband processor.

The baseband apparatus 213 may include, for example, at least one baseband board. A plurality of chips are disposed on the baseband board. As shown in FIG. 20, one of the chips is, for example, the baseband processor, and is connected to the memory 215 through a bus interface, to call a program in the memory 215 to perform the operations of the network device shown in the foregoing method embodiment.

The network side device may further include a network interface 216, and the interface is, for example, a common public radio interface (Common Public Radio Interface, CPRI).

Specifically, the network side device 2000 of this embodiment of this application further includes: an instruction or a program stored in the memory 215 and runnable on the processor 214. The processor 214 calls the instruction or the program in the memory 215 to perform the method performed by each module shown in FIG. 17, and the same technical effects are achieved. To avoid repetition, details are omitted herein.

An embodiment of this application further provides a readable storage medium, storing a program or an instruction, where the program or the instruction, when executed by a processor, implements the processes of the foregoing embodiment of the signal sending method or the signal receiving method, and the same technical effects can be achieved. To avoid repetition, details are omitted herein.

The processor is the processor in the terminal described in the foregoing embodiment. The readable storage medium includes a computer-readable storage medium, such as a computer read-only memory ROM, a random access memory RAM, a magnetic disk, or an optical disc. In some examples, the readable storage medium may be a non-transient readable storage medium.

An embodiment of this application further provides a chip, including a processor and a communication interface, where the communication interface is coupled to the processor, and the processor is configured to run a program or an instruction to implement the processes of the foregoing embodiment of the signal sending method or the signal receiving method, and the same technical effects can be achieved. To avoid repetition, details are omitted herein.

It should be understood that the chip mentioned in this embodiment of this application may also be referred to as a system on a chip, a system chip, a chip system, a system-on-chip, or the like.

An embodiment of this application further provides a computer program/program product. The computer program/program product is stored in a storage medium. The computer program/program product is executed by at least one processor to implement the processes of the foregoing embodiment of the signal sending method or the signal receiving method, and the same technical effects can be achieved. To avoid repetition, details are omitted herein.

An embodiment of this application further provides a wireless communication system, including a terminal and a network side device. The terminal may be configured to perform the steps of the signal sending method described above. The network side device may be configured to perform the steps of the signal receiving method described above.

It should be noted that the term "include", "comprise", or any other variant thereof in this specification is intended to cover a non-exclusive inclusion, so that a process, method, article, or apparatus including a series of elements includes not only those elements, but also other elements not explicitly listed, or elements inherent to such a process, method, article, or apparatus. Without more restrictions, the elements defined by the sentence "including a ..." do not exclude the existence of other identical elements in the process, method, article, or apparatus including the elements. In addition, it should be noted that the scope of the methods and apparatuses in the implementations of this application is not limited to performing functions in an order shown or discussed, but may further include performing functions in a substantially simultaneous manner or in a reverse order depending on the functions involved. For example, the described methods may be performed in an order different from the described order, and various steps may be added, omitted, or combined. In addition, features described with reference to some examples may be combined in other examples.

According to the descriptions of the foregoing implementations, a person skilled in the art may clearly understand that the methods in the foregoing embodiments may be implemented by using a computer software product and a necessary universal hardware platform, or may certainly be implemented by using hardware. The computer software product is stored in a storage medium (for example, a ROM, a RAM, a magnetic disk, or an optical disc), and includes several instructions, to enable a terminal or a network side device to perform the methods described in the embodiments of this application.

The foregoing describes the embodiments of this application with reference to the accompanying drawings. However, this application is not limited to the foregoing specific implementations. The foregoing specific implementations are merely examples, but are not limitative. Inspired by this application, a person of ordinary skill in the art may further make implementations in many forms without departing from the purposes of this application and the protection scope of the claims, and all the implementations fall within the protection of this application.

## Claims

1. A signal sending method, comprising:
obtaining, by a terminal, first information from a first cell or a second cell;
sending, by the terminal, a first signal on a target resource based on the first information, wherein
the first signal is used for triggering or requesting at least one of system information block SIB adaptation, synchronization signal block SSB adaptation, random access occasion RO adaptation, or paging adaptation of the second cell;
the first information is used for determining at least one of the target resource, the first signal, or the second cell; and
the target resource comprises at least one of the following:
a target random access channel occasion RO, used for random access, of the second cell;
a first resource, which is a random access channel RACH resource used for random access partition; or
a second resource, which is a resource separate from a RACH resource of the second cell and dedicated to sending the first signal.

2. The method according to claim 1, wherein the target RO, used for random access, of the second cell is determined based on a measurement result of a reference signal of the second cell; or
the target RO, used for random access, of the second cell is determined by an RO mask; or
the target RO, used for random access, of the second cell is an RO associated with a target SSB index, wherein
the RO mask and the target SSB index are comprised in the first information or configured by a network side.

3. The method according to claim 2, wherein
the target RO, for random access, of the second cell is an RO corresponding to a reference signal having a best measurement result among reference signals of the second cell; or
the target RO, used for random access, of the second cell is an RO corresponding to a reference signal whose measurement result is greater than a target threshold among reference signals of the second cell, wherein the target threshold is configured by the network side or comprised in the first information, and a plurality of target thresholds and first signals of different purposes are mapped one to one.

4. The method according to claim 2, wherein the RO mask is used for indicating one or more ROs that are allowed to send the first signal among ROs associated with each SSB, or is used for indicating one or more ROs that are allowed to send the first signal among ROs associated with the target SSB index.

5. The method according to claim 2 or 4, wherein there are one or more RO masks, and when there are a plurality of RO masks, the plurality of RO masks are used for determining one or more ROs of first signals of different purposes.

6. The method according to any one of claims 1 to 5, wherein the second resource comprises a plurality of sets of resources used for the first signals of different purposes.

7. The method according to any one of claims 1 to 6, wherein no mapping relationship between SSBs and ROs exists in the second resource.

8. The method according to any one of claims 1 to 7, wherein the first signal is one of target preambles, configured by the network side, that can be used for sending the first signal, and the target preamble comprises at least one of the following:
a preamble not used for random access; or
a preamble used for random access.

9. The method according to claim 8, wherein an index of the preamble not used for random access is located before or after an index of a preamble used for a system information request.

10. The method according to claim 8, wherein an index of the preamble used for random access is located before an index of a contention-free preamble and after an index of a preamble used for a coverage enhancement feature.

11. The method according to any one of claims 1 to 10, wherein the first information comprises at least one of the following:
related information of the second cell;
configuration information of the first signal;
target threshold information used for determining the target resource;
a target SSB index;
time division duplex TDD configuration information;
random access configuration information;
additional random access common configuration information; or
an RO mask.

12. The method according to claim 11, wherein the related information of the second cell comprises at least one of the following:
a timing or a system frame number SFN;
a timing offset from the first cell;
an SSB burst pattern and periodicity;
SSB transmit power;
a timing advance offset; or
a frequency of the second cell.

13. The method according to claim 11 or 12, wherein the configuration information of the first signal comprises at least one of the following:
a time-frequency domain resource configuration; or
a preamble-related configuration.

14. The method according to claim 13, wherein the preamble-related configuration comprises at least one of the following:
a preamble format;
a quantity of repeated transmissions;
an occasion pattern for repeated transmissions;
a first time domain offset, used for indicating a quantity of first signal occasions WOs spaced between adjacent target resource groups associated with a same SSB;
a second time domain offset, used for indicating a quantity of WOs spaced between adjacent target resource groups;
a preamble root sequence;
a quantity of target preambles;
a start index of the target preamble;
an end index of the target preamble;
a quantity of SSBs associated with the WO, and a quantity of preambles associated with each SSB;
a feature combination preamble configuration;
a feature in a feature combination; or
a feature priority.

15. The method according to any one of claims 11 to 14, wherein the target threshold information comprises at least one of the following:
a first threshold, wherein the first threshold is an SSB target threshold to which reference is made when an RO is selected for random access;
a second threshold, wherein the second threshold is an SSB target threshold to which reference is made when a first signal of a first purpose is sent, and the first purpose is to trigger or request SIB adaptation of the second cell;
a third threshold, wherein the third threshold is an SSB target threshold to which reference is made when a first signal of a second purpose is sent, and the second purpose is to trigger or request SSB adaptation of the second cell;
a fourth threshold, wherein the fourth threshold is an SSB target threshold to which reference is made when a first signal of a third purpose is sent, and the third purpose is to trigger or request RO adaptation of the second cell; or
a fifth threshold, wherein the fifth threshold is an SSB target threshold to which reference is made when a first signal of a fourth purpose is sent, and the fourth purpose is to trigger or request paging adaptation of the second cell.

16. The method according to any one of claims 11 to 15, wherein the random access configuration information comprises at least one of a random access common configuration and a random access generic configuration, wherein
the random access common configuration comprises at least one of the following:
a total quantity of random access preambles;
a quantity of SSBs associated with each RO and a quantity of preambles associated with each SSB;
a physical random access channel PRACH root sequence index; or
an SSB target threshold to which reference is made when an RO is selected for random access; and
the random access generic configuration comprises at least one of the following:
a PRACH configuration index;
a frequency division multiplexing FDM configuration of a contention-based first random access message Msg1;
a frequency domain start position of Msg1;
preamble received target power; or
a power ramping step.

17. The method according to any one of claims 11 to 16, wherein the RO mask comprises one of the following:
first indication information, used for indicating a start index and quantity of one or more ROs that are allowed to send the first signal among ROs associated with each SSB, wherein among the ROs associated with each SSB, indexs of the ROs are numbered in an order of frequency domain followed by time domain;
second indication information, used for indicating parity of indexs of one or more ROs that are allowed to send the first signal among ROs associated with each SSB; or
third indication information, used for indicating a quantity of one or more ROs that are allowed to send the first signal among ROs associated with each SSB, wherein a starting RO is a default RO.

18. The method according to any one of claims 1 to 17, wherein sending, by the terminal, the first signal on the target resource based on the first information comprises:
determining, by the terminal, a plurality of target resource groups in the target resource, and repeatedly sending the first signal in the plurality of target resource groups; or
repeatedly sending, by the terminal based on a transmission pattern and a quantity of repeated transmissions of a specific time window, the first signal within the specific time window and on a target resource corresponding to the transmission pattern.

19. The method according to claim 18, wherein repeatedly sending, by the terminal, the first signal in the plurality of target resource groups comprises:
determining, by the terminal, a starting WO and remaining WOs of a first target resource group within the specific time window; and
determining, by the terminal, a starting WO and remaining WOs of each of remaining target resource groups in the plurality of target resource groups based on the first time domain offset within the specific time window in a case that a mapping relationship exists between the target resource and the SSB; or
determining, by the terminal, a starting WO and remaining WOs of each of remaining target resource groups in the plurality of target resource groups based on the second time domain offset within the specific time window in a case that no mapping relationship exists between the target resource and the SSB, wherein
a quantity of remaining WOs in each target resource group is equal to the quantity of repeated transmissions minus 1.

20. The method according to claim 19, wherein in a case that the target resource is associated with an SSB, the plurality of target resource groups are associated with a same SSB.

21. A signal receiving method, comprising:
receiving, by a network side device, a first signal sent on a target resource, wherein
the first signal is used for triggering or requesting at least one of system information block SIB adaptation, synchronization signal block SSB adaptation, random access occasion RO adaptation, or paging adaptation of a second cell; and
the target resource comprises at least one of the following:
a target random access channel occasion RO, used for random access, of the second cell;
a first resource, which is a random access channel RACH resource used for random access partition; or
a second resource, which is a resource separate from a RACH resource of the second cell and dedicated to sending the first signal.

22. The method according to claim 21, wherein the target RO, used for random access, of the second cell is determined based on a measurement result of a reference signal of the second cell; or
the target RO, used for random access, of the second cell is determined by an RO mask; or
the target RO, used for random access, of the second cell is an RO associated with a target SSB index, wherein
the RO mask and the target SSB index are comprised in first information or configured by a network side.

23. The method according to claim 22, wherein the RO mask is used for indicating one or more ROs that are allowed to send the first signal among ROs associated with each SSB, or is used for indicating one or more ROs that are allowed to send the first signal among ROs associated with the target SSB index.

24. The method according to any one of claims 21 to 23, wherein the first signal is one of target preambles, configured by the network side, that can be used for sending the first signal, and the target preamble comprises at least one of the following:
a preamble not used for random access; or
a preamble used for random access.

25. A signal sending apparatus, comprising:
an obtaining module, configured to obtain first information from a first cell or a second cell; and
a sending module, configured to send a first signal on a target resource based on the first information, wherein
the first signal is used for triggering or requesting at least one of system information block SIB adaptation, synchronization signal block SSB adaptation, random access occasion RO adaptation, or paging adaptation of the second cell;
the first information is used for determining at least one of the target resource, the first signal, or the second cell; and
the target resource comprises at least one of the following:
a target random access channel occasion RO, used for random access, of the second cell;
a first resource, which is a random access channel RACH resource used for random access partition; or
a second resource, which is a resource separate from a RACH resource of the second cell and dedicated to sending the first signal.

26. The apparatus according to claim 25, wherein the target RO, used for random access, of the second cell is determined based on a measurement result of a reference signal of the second cell; or
the target RO, used for random access, of the second cell is determined by an RO mask; or
the target RO, used for random access, of the second cell is an RO associated with a target SSB index, wherein
the RO mask and the target SSB index are comprised in the first information or configured by a network side.

27. The apparatus according to claim 26, wherein the RO mask is used for indicating one or more ROs that are allowed to send the first signal among ROs associated with each SSB, or is used for indicating one or more ROs that are allowed to send the first signal among ROs associated with the target SSB index.

28. The apparatus according to any one of claims 25 to 27, wherein the first signal is one of target preambles, configured by a network side device, that can be used for sending the first signal, and the target preamble comprises at least one of the following:
a preamble not used for random access; or
a preamble used for random access.

29. The apparatus according to any one of claims 25 to 28, wherein the sending module is further configured to:
determine a plurality of target resource groups in the target resource, and repeatedly send the first signal in the plurality of target resource groups; or
repeatedly send, based on a transmission pattern and a quantity of repeated transmissions of a specific time window, the first signal within the specific time window and on a target resource corresponding to the transmission pattern.

30. The apparatus according to claim 29, wherein the sending module is further configured to:
determine a starting WO and remaining WOs of a first target resource group within the specific time window; and
determine a starting WO and remaining WOs of each of remaining target resource groups in the plurality of target resource groups based on a first time domain offset within the specific time window in a case that a mapping relationship exists between the target resource and an SSB; or
determine a starting WO and remaining WOs of each of remaining target resource groups in the plurality of target resource groups based on a second time domain offset within the specific time window in a case that no mapping relationship exists between the target resource and an SSB, wherein
a quantity of remaining WOs in each target resource group is equal to the quantity of repeated transmissions minus 1.

31. A signal receiving apparatus, comprising:
a receiving module, configured to receive a first signal sent on a target resource, wherein
the first signal is used for triggering or requesting at least one of system information block SIB adaptation, synchronization signal block SSB adaptation, random access occasion RO adaptation, or paging adaptation of a second cell; and
the target resource comprises at least one of the following:
a target random access channel occasion RO, used for random access, of the second cell;
a first resource, which is a separate random access channel RACH resource used for random access partition; or
a second resource, which is a resource separate from a RACH resource of the second cell and dedicated to sending the first signal.

32. The apparatus according to claim 31, wherein the target RO, used for random access, of the second cell is determined based on a measurement result of a reference signal of the second cell; or
the target RO, used for random access, of the second cell is determined by an RO mask; or
the target RO, used for random access, of the second cell is an RO associated with a target SSB index, wherein
the RO mask and the target SSB index are comprised in first information or configured by a network side.

33. The apparatus according to claim 32, wherein the RO mask is used for indicating one or more ROs that are allowed to send the first signal among ROs associated with each SSB, or is used for indicating one or more ROs that are allowed to send the first signal among ROs associated with the target SSB index.

34. The apparatus according to any one of claims 31 to 33, wherein the first signal is one of target preambles, configured by the network side, that can be used for sending the first signal, and the target preamble comprises at least one of the following:
a preamble not used for random access; or
a preamble used for random access.

35. A terminal, comprising a processor and a memory, wherein the memory stores a program or an instruction runnable on the processor, and the program or the instruction, when executed by the processor, implements the steps of the signal sending method according to any one of claims 1 to 20.

36. A network side device, comprising a processor and a memory, wherein the memory stores a program or an instruction runnable on the processor, and the program or the instruction, when executed by the processor, implements the steps of the signal receiving method according to any one of claims 21 to 24.

37. A readable storage medium, wherein the readable storage medium stores a program or an instruction, and the program or the instruction, when executed by a processor, implements the steps of the signal sending method according to any one of claims 1 to 20, or the steps of the signal receiving method according to any one of claims 21 to 24.
